# EUROPEAN PATENT APPLICATION

(11) **EP 4 391 314 A1**
(43) Date of publication of application: **26.06.2024**
(21) Application number: 23215336.1
(22) Date of filing: 08.12.2023
(51) Int. Cl.: H02K 1/278, H02K 1/2791, H02K 21/14, H02K 21/22

(54) **POWER TOOL MOTOR ROTOR CONFIGURATIONS**

(30) Priority: 09.12.2022 US 202263386699 P; 21.04.2023 US 202363497485 P
(71) Applicant: Milwaukee Electric Tool Corporation, Brookfield, WI 53005 (US)
(72) Inventor: GOSALIA, Rohan S, Brookfield (US); ZHANG, Zhiwei, Brookfield (US); EMERSON, Linnea, Lisbon (US); BOULANGER, Keith, Twin Lakes (US); HESSENBERGER, Jeffrey C, Neosho (US); BAILEY, Matthew R, Racine (US); FARHAN, Ashad, Brookfield (US)
(74) Representative: Forresters IP LLP

(57) **Abstract**

A power tool may include a battery pack interface configured to receive a removable and rechargeable battery pack. A device may include an outer rotor motor including a stator including a plurality of stator teeth configured to receive a plurality of stator coils and a rotor configured to rotate around the stator. The rotor includes a first permanent magnet positioned on an inner surface of the rotor, a second permanent magnet positioned on the inner surface of the rotor, and an air slot located between the first permanent magnet and the second permanent magnet on the inner surface of the rotor. The air slot has a length and a width. The length of the air slot is greater than a length of the first permanent magnet or the second permanent magnet.

## Description

### RELATED APPLICATIONS

This application claims the benefit of U.S. Provisional Patent Application No. 63/386,699, filed December 9, 2022, and U.S. Provisional Patent Application No. 63/497,485, filed April 21, 2023, the entire content of each of which is hereby incorporated by reference.

### FIELD

Embodiments described herein relate to a motor of a power tool.

### SUMMARY

Power tools described herein include a battery pack interface configured to receive a removable and rechargeable battery pack and an outer rotor motor. The outer rotor motor incudes a stator including a plurality of stator teeth configured to receive a plurality of stator coils, and a rotor configured to rotate around the stator. The rotor includes a first permanent magnet positioned on an inner surface of the rotor, a second permanent magnet positioned on the inner surface of the rotor, and an air slot located between the first permanent magnet and the second permanent magnet on the inner surface of the rotor. The air slot has a length and a width. The length of the air slot is greater than a length of the first permanent magnet or the second permanent magnet.

In some aspects, the stator includes at least twelve stator slots, and the rotor includes at least five rotor poles.

In some aspects, the first permanent magnet and the second permanent magnet are composed of a rare earth metal.

In some aspects, the rotor further includes a consequent pole positioned in the air slot.

In some aspects, the consequent pole is an iron pole.

In some aspects, the consequent pole includes a length of approximately 1 millimeter to 12 millimeters.

In some aspects, the consequent pole is an iron pole.

In some aspects, the consequent pole includes a length of approximately 1 millimeter to 12 millimeters.

In some aspects, the rotor further includes a lamination stack, the lamination stack including an inner lamination portion and an outer lamination portion, and a plastic mold, wherein the plastic mold is configured to increase retention of the lamination stack.

In some aspects, the inner lamination portion includes a triangular groove portion configured to retain a first portion of the plastic mold to secure the plastic mold to the inner lamination portion.

In some aspects, the outer lamination portion includes an L-shaped portion configured to retain a second portion of the plastic mold to secure the outer lamination portion to the plastic mold.

In some aspects, the plastic mold is made of a non-magnetic material.

Power tools described herein include a battery pack interface configured to receive a removable and rechargeable battery pack and a motor. The motor includes a stator including a plurality of stator teeth configured to receive a plurality of stator coils and a rotor configured to rotate within the stator. The rotor includes a first permanent magnet positioned within a first slot of the rotor, a second permanent magnet positioned within a second slot of the rotor, a first consequent pole positioned between the first permanent magnet and the second permanent magnet, the first consequent pole having a first length and a first width, and a second consequent pole positioned between the first permanent magnet and the second permanent magnet, the second consequent pole having a second length and a second width.

In some aspects, the rotor includes an outer diameter of approximately 22 millimeters.

In some aspects, the first permanent magnet and the second permanent magnet are composed of a rare earth metal.

In some aspects, the first permanent magnet includes a length of approximately 1 millimeters to 12 millimeters and a width of approximately 2 millimeters to 3 millimeters.

In some aspects, the rotor further includes a lamination stack and an air slot.

In some aspects, the air slot is located within the lamination stack and extends in an axially transverse direction along the rotor.

In some aspects, the air slot include a length that extends approximately 45-degrees away from the first permanent magnet in a direction towards the first consequent pole.

Power tools described herein include a battery pack interface configured to receive a removable and rechargeable battery pack and a motor. The motor includes a stator including a plurality of stator teeth configured to receive a plurality of stator coils and a rotor. The rotor is configured to rotate within the stator. The rotor includes a lamination stack, a first air slot located within the lamination stack and extends in an axially transverse direction along the rotor, a second air slot located within the lamination stack and extends in the axially transverse direction along the rotor, a first permanent magnet positioned within a first slot of the rotor, a second permanent magnet positioned within a second slot of the rotor, a first consequent pole positioned between the first permanent magnet and the second permanent magnet, the first consequent pole having a first length and a first width, and a second consequent pole positioned between the first permanent magnet and the second permanent magnet, the second consequent pole having a second length and a second width.

In some aspects, the first air slot includes a first air slot length that extends approximately 45-degrees away from the first permanent magnet in a direction towards the first consequent pole, and the second air slot includes a second air slot length that extends approximately 45-degrees away from the second permanent magnet in a direction towards the second consequent pole.

In some aspects, the first air slot length is sized according to a length of the first permanent magnet, and the second air slot length is sized according to the length of the second permanent magnet.

Power tools described herein include a battery pack interface configured to receive a removable and rechargeable battery pack, and a consequent pole motor. The consequent pole motor includes a stator including a plurality of stator teeth configured to receive a plurality of stator coils, and a rotor configured to rotate around the stator. The rotor includes a first permanent magnet positioned on an inner surface of the rotor, a second permanent magnet positioned on the inner surface of the rotor, and a consequent pole located between the first permanent magnet and the second permanent magnet on the inner surface of the rotor. The consequent pole has a length and a width. The consequent pole is made of a non-magnetic material.

Power tools described herein include a battery pack interface configured to receive a removable and rechargeable battery pack, and a consequent pole motor. The consequent pole motor includes a stator including a plurality of stator teeth configured to receive a plurality of stator coils, and a rotor configured to rotate within the stator. The rotor includes a first permanent magnet positioned within a first recess of the rotor, a second permanent magnet positioned within a second recess of the rotor, a first consequent pole positioned between the first permanent magnet and the second permanent magnet, and a second consequent pole positioned between the first permanent magnet and the second permanent magnet. The first consequent pole has a first length and a first width, and the second consequent pole has a second length and a second width.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the embodiments will become apparent by consideration of the detailed description and accompanying drawings.

### BRIEF DESCRIPTION OF THE DRAWINGS

FIG. 1 illustrates a perspective view of a power tool, according to some embodiments.
FIG. 2 illustrates a block diagram of a control system of the power tool of FIG. 1, according to some embodiments.
FIG. 3 illustrates a battery pack for use with the power tool of FIG. 1, according to some embodiments.
FIG. 4 illustrates a block diagram of a control system of the battery pack of FIG. 3, according to some embodiments.
FIG. 5A illustrates an outer rotor motor, according to some embodiments.
FIG. 5B illustrates an outer rotor motor, according to some embodiments.
FIG. 5C illustrates an outer rotor motor, according to some embodiments.
FIG. 5D illustrates an outer rotor motor, according to some embodiments.
FIG. 6 graphically illustrates steel losses vs output power, according to some embodiments.
FIG. 7 graphically illustrates steel losses vs speed, according to some embodiments.
FIG. 8 illustrates flux flow in an outer rotor motor and a consequent pole motor, according to some embodiments.
FIG. 9 graphically illustrates performance of various motors, according to some embodiments.
FIG. 10 illustrates an inner rotor motor, according to some embodiments.
FIG. 11 illustrates an exploded view of the inner rotor motor of FIG. 10, according to some embodiments.
FIG. 12 illustrates an inner rotor motor in an air flow test fixture, according to some embodiments.
FIG. 13 illustrates a consequent pole motor rotor, according to some embodiments.
FIG. 14 illustrates a consequent pole motor rotor, according to some embodiments.
FIG. 15A illustrates an internal permanent magnet motor, according to some embodiments.
FIG. 15B illustrates an internal permanent magnet motor, according to some embodiments.
FIG. 15C illustrates a consequent pole motor, according to some embodiments.
FIG. 16 illustrates of flux flow in a consequent pole motor and in internal permanent magnet motors, according to some embodiments.
FIG. 17 graphically illustrates performance of a consequent pole motor and internal permanent magnet motors, according to some embodiments.
FIG. 18 graphically illustrates steel loss vs speed of a consequent pole motor, according to some embodiments.
FIG. 19 graphically illustrates steel loss vs output power of a consequent pole motor, according to some embodiments.
FIG. 20A illustrates a consequent pole motor, according to some embodiments.
FIG. 20B illustrates a consequent pole motor, according to some embodiments.
FIG. 21 graphically illustrates performance of various consequent pole motors, according to some embodiments.
FIG. 22 graphically illustrates torque ripple of a consequent pole motor, according to some embodiments.
FIG. 23 illustrates an internal permanent magnet motor rotor, according to some embodiments.
FIG. 24A illustrates an internal permanent magnet motor, according to some embodiments.
FIG. 24B illustrates an internal permanent magnet motor, according to some embodiments.
FIG. 24C illustrates an internal permanent magnet motor, according to some embodiments.
FIG. 25 illustrates a motor, according to some embodiments.
FIG. 26 graphically illustrates performance of various motors, according to some embodiments.
FIG. 27 illustrates a consequent pole motor, according to some embodiments.
FIG. 28 graphically illustrates performance of various motors, according to some embodiments.
FIG. 29 illustrates an internal permanent magnet motor, according to some embodiments.
FIG. 30 graphically illustrates performance of various motors, according to some embodiments.

### DETAILED DESCRIPTION

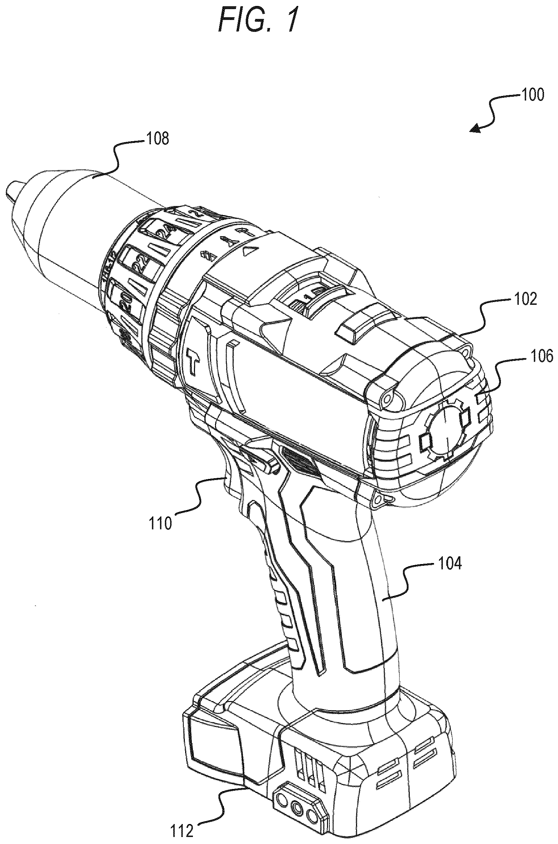

FIG. 1 illustrates a power tool 100 including a permanent magnet motor. The power tool 100 is, for example, a hammer drill including a housing 102. The housing 102 includes a handle portion 104 and motor housing portion 106. The power tool 100 further includes an output driver 108 (illustrated as a chuck), a trigger 110, and a battery pack interface 112. The battery pack interface 112 is configured to mechanically and electrically connect to or receive a power tool battery pack (also referred to as a removable and/or rechargeable battery pack). Although FIG. 1 illustrates a hammer drill, in some embodiments, the components described herein are incorporated into other types of power tools including drill-drivers, impact drivers, impact wrenches, angle grinders, circular saws, reciprocating saws, plate compactors, core drills, string trimmers, leaf blowers, vacuums, and the like. In a permanent magnet motor power tool, such as power tool 100, switching elements are selectively enabled and disabled by control signals from a controller to selectively apply power from a power source (e.g., battery pack) to drive a permanent magnet motor.

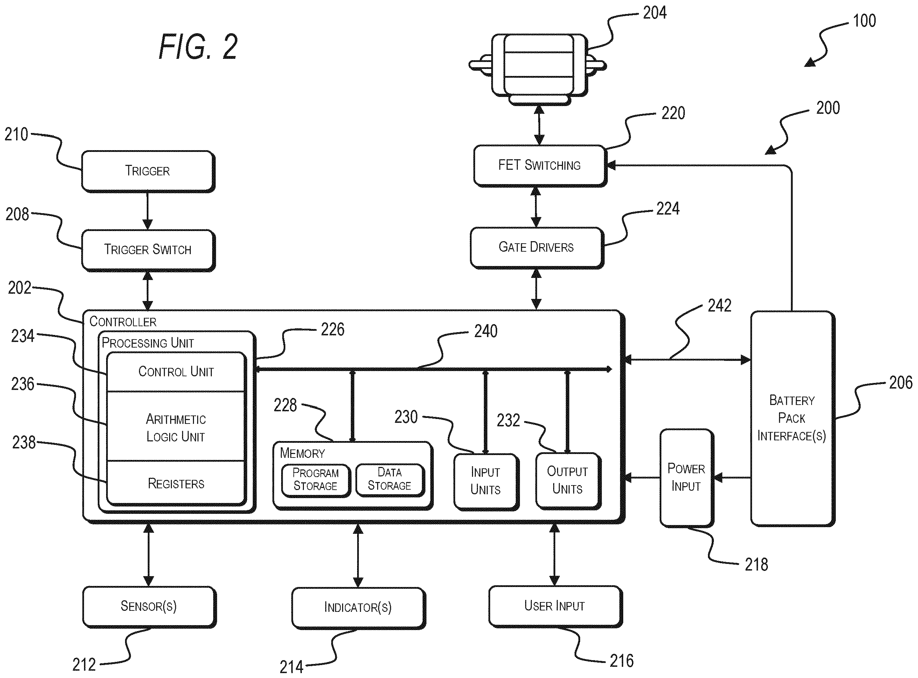

FIG. 2 illustrates a control system 200 for the power tool 100. The control system 200 includes a controller 202. The controller 202 is electrically and/or communicatively connected to a variety of modules or components of the power tool 100. For example, the illustrated controller 202 is electrically connected to a motor 204, a battery pack interface 206, a trigger switch 208 (connected to a trigger 210), one or more sensors 212 or sensing circuits, one or more indicators 214, a user input module 216, a power input module 218, an inverter bridge or FET switching module 220 (e.g., including a plurality of switching FETs), and gate drivers 224 for driving the FET switching module 220. In some embodiments, motor 204 is a permanent magnet motor. The controller 202 includes combinations of hardware and software that are operable to, among other things, control the operation of the power tool 100, monitor the operation of the power tool 100, activate the one or more indicators 214 (e.g., an LED), etc.

The controller 202 includes a plurality of electrical and electronic components that provide power, operational control, and protection to the components and modules within the controller 202 and/or the power tool 100. For example, the controller 202 includes, among other things, a processing unit 226 (e.g., a microprocessor, a microcontroller, an electronic controller, an electronic processor, or another suitable programmable device), a memory 228, input units 230, and output units 232. The processing unit 226 includes, among other things, a control unit 234, an arithmetic logic unit ("ALU") 236, and a plurality of registers 238, and is implemented using a known computer architecture (e.g., a modified Harvard architecture, a von Neumann architecture, etc.). The processing unit 226, the memory 228, the input units 230, and the output units 232, as well as the various modules or circuits connected to the controller 202 are connected by one or more control and/or data buses (e.g., common bus 240). The control and/or data buses are shown generally in FIG. 2 for illustrative purposes. The use of one or more control and/or data buses for the interconnection between and communication among the various modules, circuits, and components would be known to a person skilled in the art in view of the invention described herein.

The memory 228 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 226 is connected to the memory 228 and executes software instructions that are capable of being stored in a RAM of the memory 228 (e.g., during execution), a ROM of the memory 228 (e.g., on a generally permanent basis), or another non-transitory computer readable medium such as another memory or a disc. Software included in the implementation of the power tool 100 can be stored in the memory 228 of the controller 202. The software includes, for example, firmware, one or more applications, program data, filters, rules, one or more program modules, and other executable instructions. The controller 202 is configured to retrieve from the memory 228 and execute, among other things, instructions related to the control processes and methods described herein. In other constructions, the controller 202 includes additional, fewer, or different components.

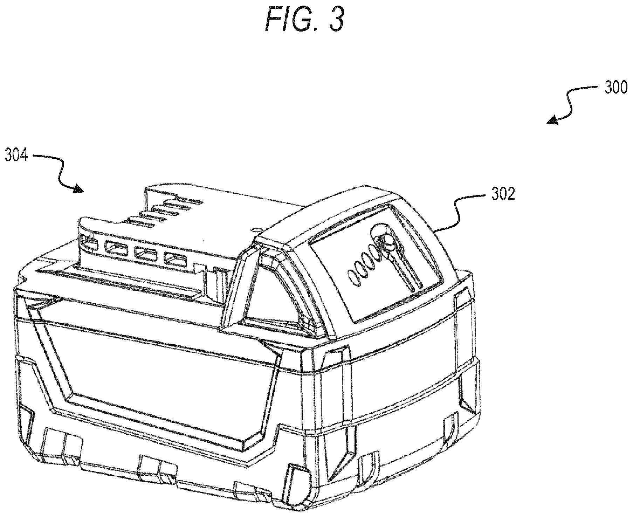

The battery pack interface 206 includes a combination of mechanical components (e.g., rails, grooves, latches, etc.) and electrical components (e.g., one or more terminals) configured to and operable for interfacing (e.g., mechanically, electrically, and communicatively connecting) with a battery pack. For example, power provided by a battery pack 300 (see FIG. 3) to the power tool 100 is provided through the battery pack interface 206 to the power input module 218. The power input module 218 includes combinations of active and passive components to regulate or control the power received from the battery pack 300 prior to power being provided to the controller 202. The battery pack interface 206 also supplies power to the FET switching module 220 to be switched by the switching FETs to selectively provide power to the motor 204. The battery pack interface 206 also includes, for example, a communication line 242 for providing a communication line or link between the controller 202 and the battery pack 300.

The sensors 212 include one or more current sensors, one or more speed sensors, one or more Hall effect sensors, one or more temperature sensors, etc. The indicators 214 include, for example, one or more light-emitting diodes ("LEDs"). The indicators 214 can be configured to display conditions of, or information associated with, the power tool 100. For example, the indicators 214 are configured to indicate measured electrical characteristics of the power tool 100, the status of the power tool, the status the motor 204, etc. The user input module 216 is operably coupled to the controller 202 to, for example, select a forward mode of operation or a reverse mode of operation, a torque and/or speed setting for the power tool 100 (e.g., using torque and/or speed switches), etc. In some embodiments, the user input module 216 includes a combination of digital and analog input or output devices required to achieve a desired level of operation for the power tool 100, such as one or more knobs, one or more dials, one or more switches, one or more buttons, etc.

FIG. 3 illustrates a battery pack 300. The battery pack 300 includes a housing 302 and an interface portion 304 for connecting the battery pack 300 to a power tool, such as the power tool 100.

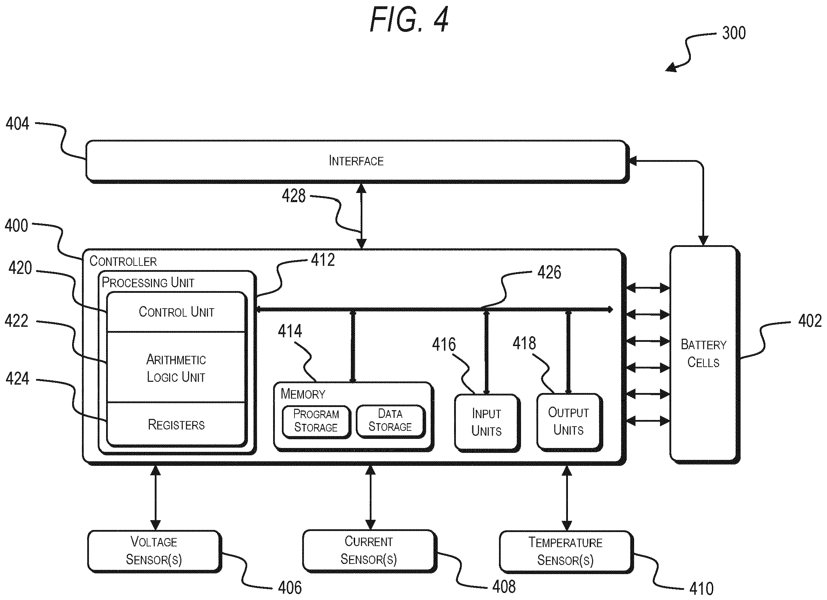

FIG. 4 illustrates a control system for the battery pack 300. The control system includes a controller 400. The controller 400 is electrically and/or communicatively connected to a variety of modules or components of the battery pack 300. For example, the illustrated controller 400 is connected to one or more battery cells 402 and an interface 404 (e.g., the interface portion 304 of the battery pack 300 illustrated in FIG. 3). The controller 400 is also connected to one or more voltage sensors or voltage sensing circuits 406, one or more current sensors or current sensing circuits 408, and one or more temperature sensors or temperature sensing circuits 410. The controller 400 includes combinations of hardware and software that are operable to, among other things, control the operation of the battery pack 300, monitor a condition of the battery pack 300, enable or disable charging of the battery pack 300, enable or disable discharging of the battery pack 300, etc.

The controller 400 includes a plurality of electrical and electronic components that provide power, operational control, and protection to the components and modules within the controller 400 and/or the battery pack 300. For example, the controller 400 includes, among other things, a processing unit 412 (e.g., a microprocessor, a microcontroller, an electronic processor, an electronic controller, or another suitable programmable device), a memory 414, input units 416, and output units 418. The processing unit 412 includes, among other things, a control unit 420, an ALU 422, and a plurality of registers 424, and is implemented using a known computer architecture (e.g., a modified Harvard architecture, a von Neumann architecture, etc.). The processing unit 412, the memory 414, the input units 416, and the output units 418, as well as the various modules or circuits connected to the controller 400 are connected by one or more control and/or data buses (e.g., common bus 426). The control and/or data buses are shown generally in FIG. 4 for illustrative purposes. The use of one or more control and/or data buses for the interconnection between and communication among the various modules, circuits, and components would be known to a person skilled in the art in view of the invention described herein.

The memory 414 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 412 is connected to the memory 414 and executes software instructions that are capable of being stored in a RAM of the memory 414 (e.g., during execution), a ROM of the memory 414 (e.g., on a generally permanent basis), or another non-transitory computer readable medium such as another memory or a disc. Software included in the implementation of the battery pack 300 can be stored in the memory 414 of the controller 400. The software includes, for example, firmware, one or more applications, program data, filters, rules, one or more program modules, and other executable instructions. The controller 400 is configured to retrieve from the memory 414 and execute, among other things, instructions related to the control processes and methods described herein. In other constructions, the controller 400 includes additional, fewer, or different components.

The interface 404 includes a combination of mechanical components (e.g., rails, grooves, latches, etc.) and electrical components (e.g., one or more terminals) configured to and operable for interfacing (e.g., mechanically, electrically, and communicatively connecting) the battery pack 300 with another device (e.g., a power tool, a battery pack charger, etc.). For example, the interface 404 is configured to communicatively connect to the controller 400 via a communications line 428.

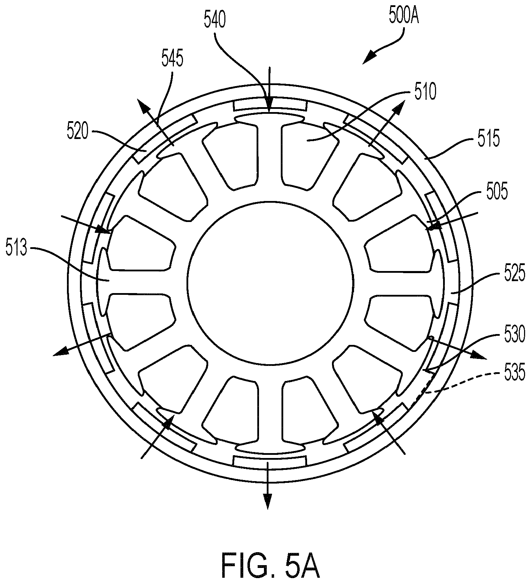

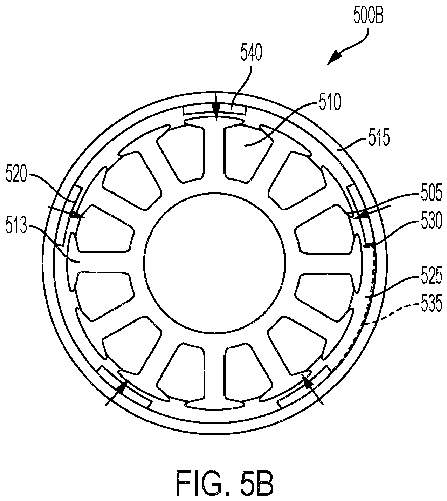

FIGS. 5A-5B illustrates an outer rotor motor according to various embodiments. As illustrated in FIG. 5A, the motor 500A includes an internal stator 505 and a plurality of stator winding slots 510. The stator also includes stator teeth 513. The plurality of stator winding slots 510 are configured to receive a plurality of windings (also referred to as stator coils), wound around the stator teeth 513. The motor 500A also includes an outer rotor 515. The rotor 515 is configured to rotate around the internal stator 505. The rotor 515 includes a plurality of permanent magnets 520 (e.g., magnets composed of rare earth metals) along the interior (e.g., along the inner surface) of the rotor 515, facing the internal stator 505. In the illustrated embodiment, the rotor includes ten total magnets. The outer rotor 515 includes an air slot 525. The air slot 525 as a width 530 and a length 535. The magnets 520 of the rotor 515 are configured to have a north pole 540 or a south pole 545. Illustrated in FIG. 5B is the motor 500B in a five magnet outer rotor configuration. In this configuration, the number of magnets 520 are reduced in order to lower the manufacturing cost of the motor 500B, to save on the environmental impact of extracting rare earth magnetic materials, etc. In this configuration, the air slot length 535 is larger between the magnets 520 such that the air slot 525 corresponds to a permanent magnet 520 having been removed from the rotor. As such, the air slot length 535 is greater than a length of the magnet 520 along the interior of the rotor 515.

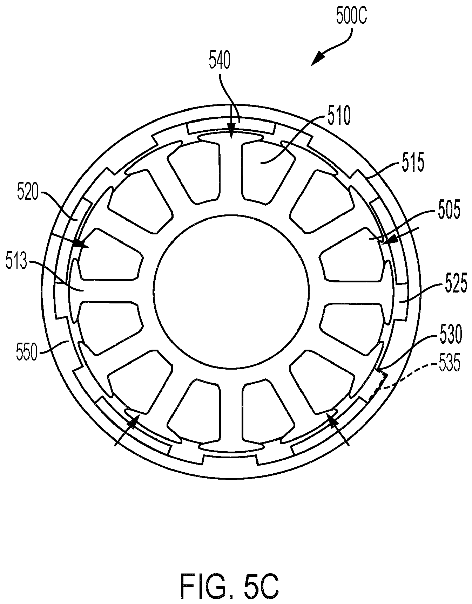

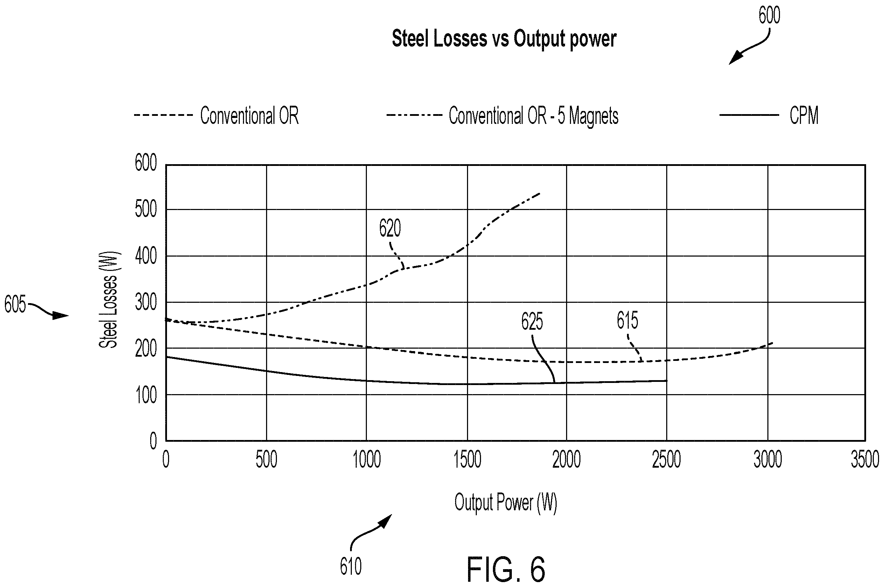

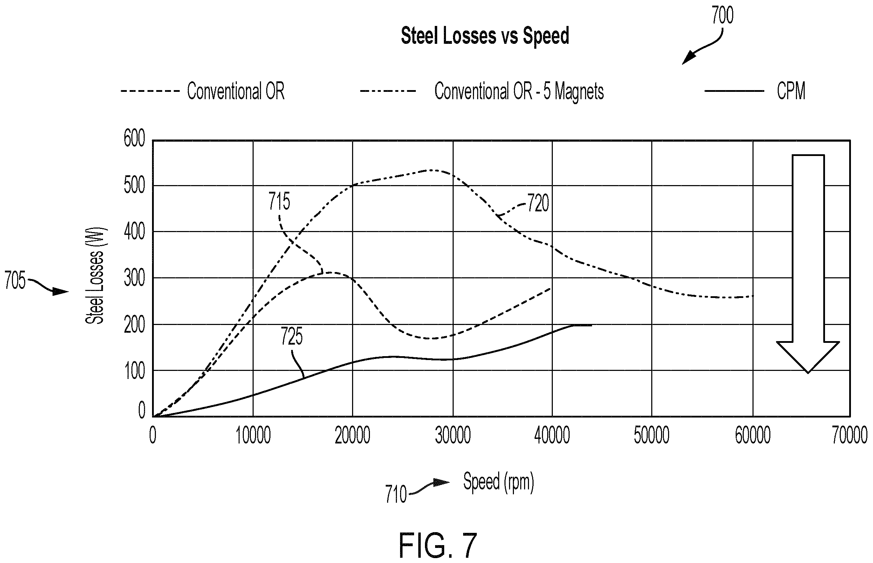

Illustrated in FIG. 5C is the motor 500C with in an optimized consequent pole motor configuration. One of the features of the consequent pole motors described herein, such as, for example the motor 500C, is the ability to provide variable speed control. For instance, by adjusting the current through the plurality of stator windings, the motor 500C may operate at different speeds. This may be particularly advantageous in power tool applications where precise speed control is important. Furthermore, consequent pole motors described herein, such as the motor 500C, may be more reliable, offer finer speed regulation, and be more generally compact than a conventional motor. Some additional advantages are illustrated in FIGS. 6 and 7, and described in greater detail below. In some embodiments, the consequent pole may be an iron pole 550. In some embodiments, consequent poles are constructed from rotor laminations.

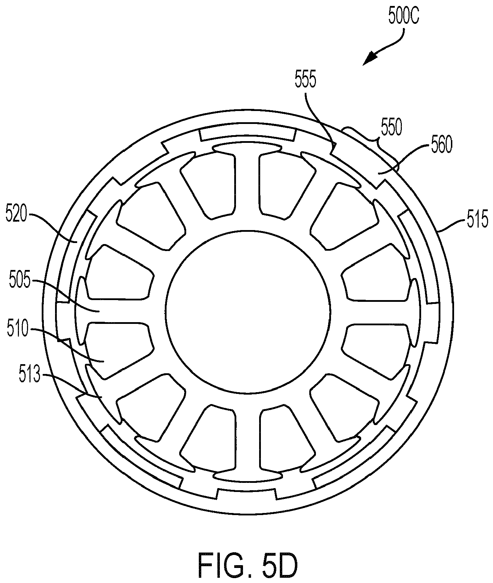

With reference to FIG. 5D, the motor 500C including the iron poles 550 is further illustrated. The iron poles 550 have a width 555 and a length 560. In some embodiments, the length 560 or the width 555 of the iron poles 550 are used to control the performance of the motor 500C. For instance, an iron pole length of 5mm may have an effect on torque ripple, cogging torque, or the like. In some instances, the iron pole 550 has a length 560 of 1mm to 12mm. For example, the iron pole 550's length 560 may be advantageously sized at 10 mm. In some examples, a greater length 560 of the iron pole 550 may provide a reduced torque ripple when compared to a more narrow length 560 of the iron pole 550. Other measurements may change the performance of the motor 500C. The outer rotor consequent pole motor can be optimized by manipulating the size of the iron poles 550.

FIG. 6 graphically illustrates steel losses vs output power of conventional outer rotor motors (e.g., motors 500A, 500B) and a consequent pole motor. In some examples, the consequent pole motor is the consequent pole motor 500C. The graph 600 illustrates the steel losses 605 of a motor compared to the output power 610 of the motor. The steel losses are, for example, the sum of both stator and rotor iron losses for up to peak power levels. Graph 600 includes plots of steel losses versus output power for a conventional outer rotor motor 615, a conventional five magnet outer rotor motor 620, and a consequent pole motor 625. In some instances, the conventional outer rotor motor 615 and the conventional five magnet outer rotor motor 620 begin at approximately the same levels of steel losses 605, between 250 Watts and 300 Watts. In some instances, the conventional outer rotor motor 615 steel losses decline as output power 610 increases. Similarly, as output power 610 increases, the consequent pole motor 625 steel losses 605 decrease. Conversely, in some instances, steel losses 605 increase in the conventional five magnet outer rotor motor 620 as output power 610 increases. In some instances, the steel losses in the conventional outer rotor motor 615 begin to increase again as output power 610 begins to exceed, for example, approximately 2500 Watts.

FIG. 7 graphically illustrates steel losses vs speed of conventional outer rotor motors (e.g., motors 500A, 500B) and a consequent pole motor. In some examples, the consequent pole motor is the consequent pole motor 500C. The graph 700 illustrates the steel losses 705 of a motor compared to the motor speed 710 of the motor. Graph 700 includes plots of steel losses versus output power for a conventional outer rotor motor 715, a conventional five magnet outer rotor motor 720, and a consequent pole motor 725. All of the motors illustrated in the graph 700 begin at the same level of steel losses 705 and motor speed 710, where the motors are stopped at zero revolutions per minute ("RPM"). In some instances, as motor speed 710 increases, the conventional outer rotor motor 715 experiences an increase in steel losses 705 until approximately 18,000 RPM and 300 Watts of steel losses, where steel losses 705 begin to decrease. Steel losses 705 begin increasing in the conventional outer rotor motor 715 again once motor speed reaches approximately 28,000 RPM and steel losses 705 reach approximately 175 Watts. In some instances, as motor speed 710 increases, the conventional five magnet outer rotor motor 720 experiences an increase in steel losses 705 until approximately 28,000 RPM and 540 Watts of steel losses, where steel losses 705 then begin to decrease. In some instances, as motor speed 710 increases, the consequent pole motor 725 experiences an increase in steel losses 705 until approximately 20,000 RPM and 125 Watts steel losses, where the steel losses plateau. Steel losses 705 again begin increasing at approximately 30,000 RPM, until plateauing again at approximately 40,000 and 200 Watts of steel losses. As illustrated, the steel losses for the consequent pole motor are significantly less than for the conventional outer rotor motors.

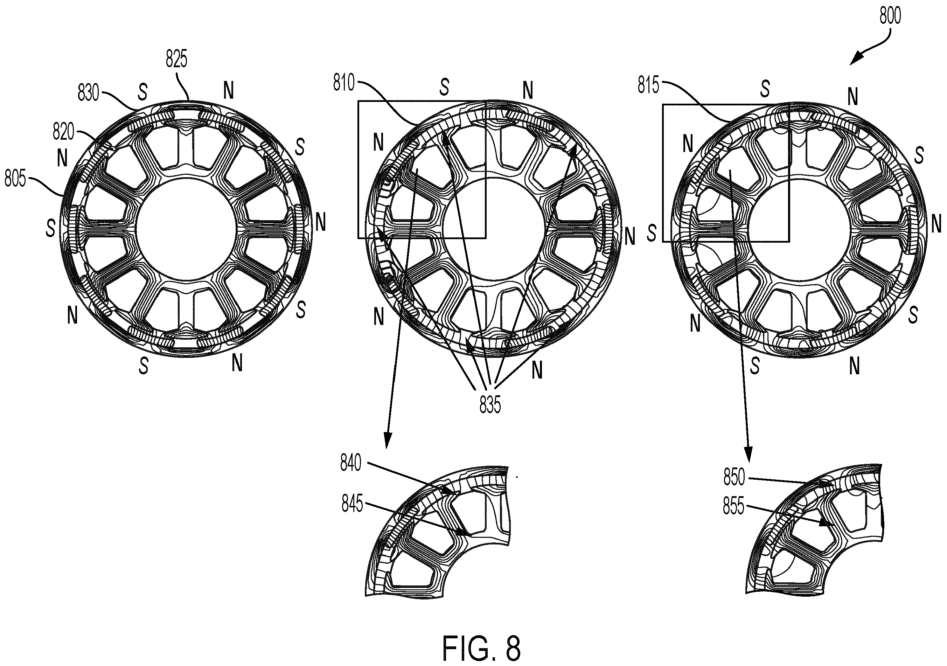

FIG. 8 illustrates flux flow in conventional outer rotor motors and a consequent pole motor. An illustration 800 includes a conventional ten magnet outer rotor motor 805, a conventional five magnet outer rotor motor 810, and an outer rotor consequent pole motor 815 (e.g., motor 500C). The conventional ten magnet outer rotor motor 805 includes magnetic field lines 820 generated by magnetic north pole 825 and south pole 830. The conventional five magnet outer rotor motor 810 has five fewer magnets, highlighted by portion 835 of the motor 810. In some embodiments, removal of these magnets causes low flux line density 840 and a longer flux path 845. In the conventional outer rotor motors 805, 810, the flux flow design moves radially outward from the stator to the rotor. The flux flow crosses an air slot between the stator and the rotor, reacts with the rotor's magnetic field, and then completes the magnetic circuit by returning through the opposite pole. The strength and position of the magnetic fields are typically fixed based on the physical setup of the windings and poles.

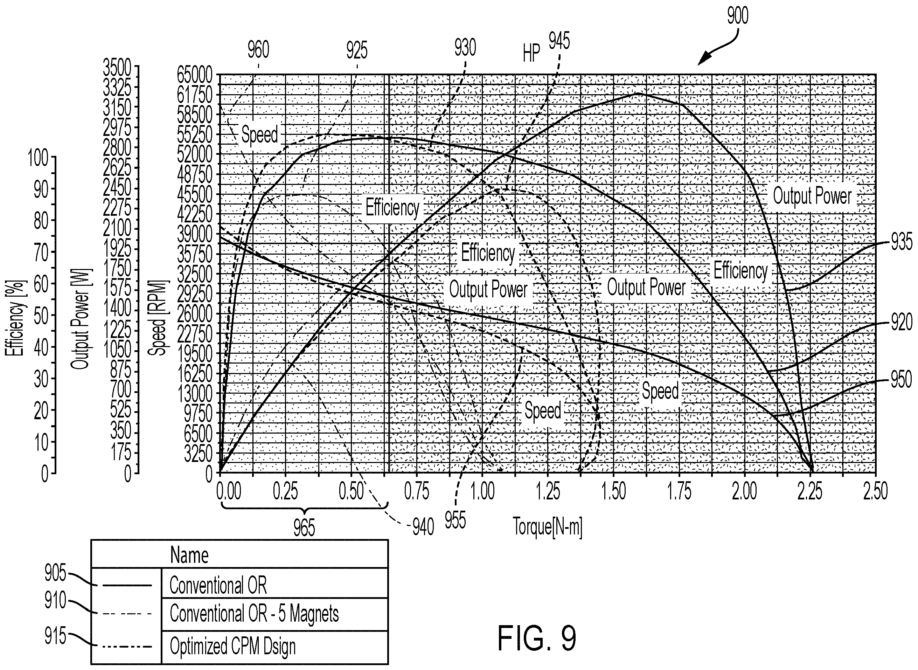

Conversely, in the consequent pole outer rotor motor 815, the stator may include two sets of windings per physical pole. In this configuration, the number of magnetic poles is effectively doubled without increasing the number of physical poles. When the windings are energized, they create overlapping magnetic fields. The resultant magnetic field is a combination of the fields generated by each winding. In some instances, the flux flow in the consequent pole outer rotor motor 815 is more dynamic and can be controlled by varying the current in the windings. As previously described, this allows for controlled changes in the magnetic field strength and pattern, which in turn controls the consequent pole outer rotor motor 815 speed and torque characteristics, as illustrated in FIG. 9 and described below.

Similar to the previously described conventional outer rotor motors 805, 810, the flux path in the consequent pole outer rotor motor 815 still moves radially from the stator to the rotor, but the overlapping and adjustable nature of the fields in a consequent pole design provides a more versatile and controllable magnetic interaction. In some instances, the outer rotor consequent pole motor 815 includes consequent poles in place of the removed magnets, creating a uniform flux density 850 and a shorter flux path 855. In some embodiments, the elements of the outer rotor consequent pole motor 815 are sized to ensure that enough flux passes through and completes a loop without saturating the consequent pole.

FIG. 9 graphically illustrates the performance of conventional outer rotor motors and a consequent pole motor. The graph 900 includes a conventional outer rotor motor 905, a conventional five magnet outer rotor motor 910, and a consequent pole motor 915 (e.g., the motor 500C). In some examples, the efficiency of the three motors 905, 910, 915 each begins at approximately the same level, where output torque is 0 Newton-meters ("Nm"). The conventional outer rotor motor 905 efficiency 920 increases to a peak of approximately 85% at 0.5 Nm. The conventional five magnet outer rotor motor 910 efficiency 925 increases to a peak of approximately 70% at 0.25 Nm. The consequent pole motor 915 efficiency 930 increases to a peak of approximately 85% at 0.4 Nm. In some examples, the output power of the three motors 905, 910, 915 each begins at approximately the same level, where output torque is 0 Nm. The conventional outer rotor motor 905 output power 935 increases to a peak of approximately 3325 Watts at 1.55 Nm. The conventional five magnet outer rotor motor 910 output power 940 increases to a peak of approximately 1900 Watts at 0.7 Nm. The consequent pole motor 915 output power 945 increases to a peak of approximately 2500 Watts at 1.15 Nm.

In some examples, the speed of the conventional outer rotor motor 905 and the consequent pole motor 915 begin at approximately the same level, where speed is 39,000 RPM. The conventional outer rotor motor 905 speed 950 steadily decreases until approximately 19,500 RPM and 1.5 Nm, after which the speed 950 begins to decrease at a more rapid rate until reaching 0 at 2.25 Nm. The consequent pole motor 915 speed 960 decreases until approximately 19,500 RPM at 1.2 Nm, at which point the motor 915 speed 955 decreases at a higher rate. The conventional five magnet outer rotor motor 910 speed 960 decreases until approximately 19,500 RPM and 0.8 Nm, after which the speed 960 decreases at a more rapid rate until reaching 0 at approximately 1.05 Nm. As evidenced by the graph 900, the efficiency of the consequent pole motor 915 and at a light load region 965 (e.g., approximately 0.65Nm or less), is greater than the conventional outer rotor motor 905 and the conventional five magnet outer rotor motor 910. In the light load region 965, the conventional five magnet outer rotor motor 910 experiences higher speeds but a greater rate of speed drop-off as load levels increase. The conventional five magnet outer rotor motor 910 also experiences slightly greater relative output power in the light load region 965, but at a lower efficiency.

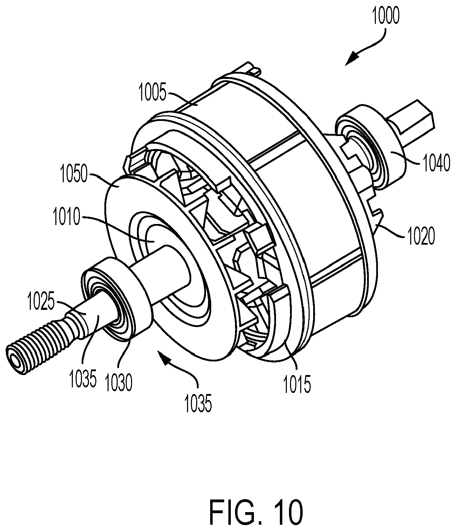

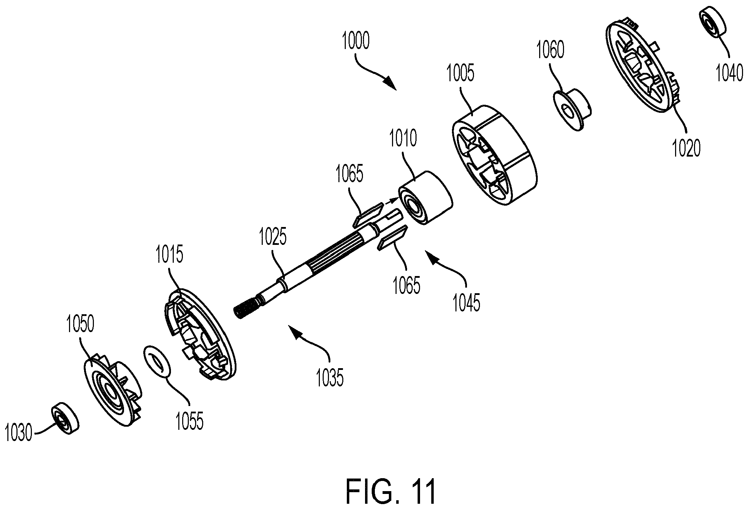

FIGS. 10 and 11 illustrate an inner rotor motor 1000, according to some embodiments. The motor 1000 includes a stator stack 1005 and a rotor stack 1010 encapsulated by a first end cap 1015 and a second end cap 1020. In some embodiments, the first end cap 1015 and the second end cap 1020 are molded as a single integral insulator for the stator stack 1005. A shaft 1025 mechanically connects with the rotor stack 1010 and extends through the rotor stack 1010. A first bearing 1030 is located on a first side 1035 of the shaft 1025, and a second bearing 1040 is located on a second end 1045 of the shaft 1025. A cooling fan 1050 is located on the around the shaft 1025 on the first side 1035 of the shaft 1025.

Illustrated in FIG. 11 is an exploded view of the motor 1000. Also included in the motor 1000 is an O-ring 1055 positioned between the cooling fan 1050 and the rotor stack 1010 at the first side 1035 of the shaft 1025. A bushing 1060 is located on a second end 1045 of the shaft 1025. Additionally illustrated are two of the plurality of magnets 1065 located within the rotor stack 1010. In some examples, the magnets 1065 are glued into the rotor stack 1010 before the remainder of the components described are press fit onto the shaft 1025.

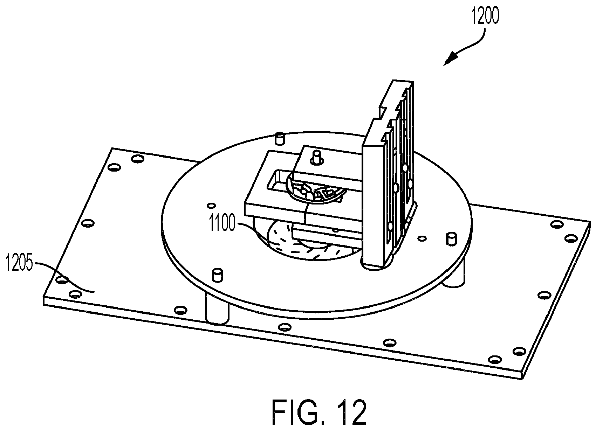

FIG. 12 illustrates a motor in an air flow test frame fixture 1200. The motor 1100 is illustrated as mounted to a baseplate 1205.

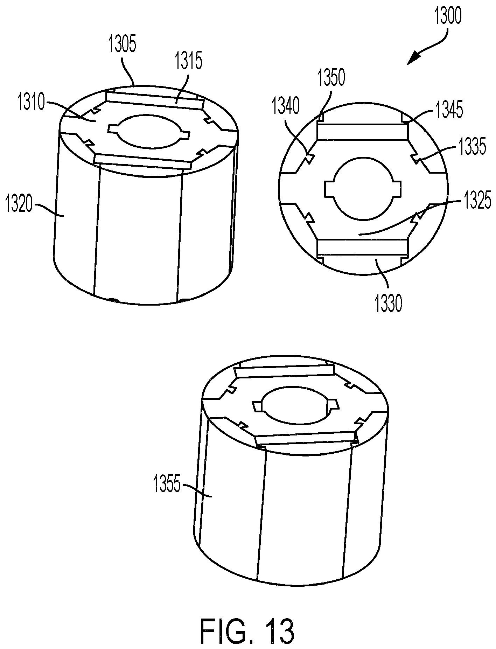

FIG. 13 illustrates a portion of a consequent pole motor 1300, according to some embodiments. A rotor 1305 includes a lamination stack 1310 and a plurality of magnet slots 1315. A plastic mold 1320 is molded to the lamination stack 1310 to increase the retention of the lamination stack 1310. The lamination stack 1310 includes an inner lamination portion 1325 and an outer lamination portion 1330. The inner lamination portion 1325 includes a triangular groove portion 1335 configured to retain a first retention portion 1340 of the plastic mold 1320. The first retention portion 1340 fits into the triangular groove portion 1335, securing the plastic mold 1320 to the inner lamination portion 1325. Similarly, the outer lamination portion 1330 includes an L-shaped portion 1345 configured to retain a second retention portion 1350 of the plastic mold 1320. The L-shaped portion 1345 and the second retention portion 1350 are configured to secure the outer lamination portion 1330 to the plastic mold 1320. In some embodiments, the plastic mold 1320 is made of a non-magnetic metal material 1355. For instance, in some examples, the plastic mold may be made of aluminum, titanium, or other non-magnetic metals or alloys.

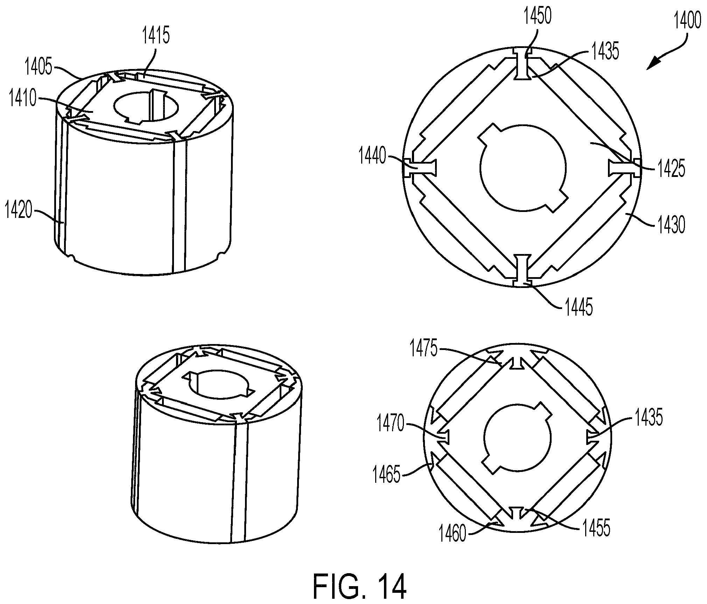

FIG. 14 illustrates a portion of a consequent pole motor 1400, according to some embodiments. A rotor 1405 includes a lamination stack 1410 and a plurality of magnet slots 1415. A plastic mold 1420 is molded to the lamination stacks 1410 to increase the retention of the lamination stacks 1410. The lamination stacks 1410 include an inner lamination portion 1425 and an outer lamination portion 1430. The inner lamination portion 1425 includes a first dovetail groove portion 1435 configured to retain a first retention portion 1440 of the plastic mold 1420. Similar to the rotor 1305 as previously described, the first retention portion 1440 fits into the first dovetail groove portion 1435, securing the plastic mold 1420 to the inner lamination portion 1425. The outer lamination portion 1430 includes a second dovetail portion 1445 configured to retain a second retention portion 1450 of the plastic mold 1420. The second dovetail portion 1445 and the second retention portion 1450 are configured to secure the outer lamination portion 1430 to the plastic mold 1420. In some instances, the inner lamination portion 1425 and outer lamination portion 1430 may contain additional or alternative retention configurations (e.g., overmolding).

In some embodiments, the rotor 1405 includes different configurations of groove portions designed to secure the inner lamination portion 1425 and outer lamination portion 1430 to the plastic mold 1420. For instance, the inner lamination portion 1425 may include a combination of the first dovetail groove portion 1435 and a first plurality of triangular groove portions 1455. The outer lamination stack may include a second plurality of triangular groove portions 1460. In some instances, the plastic mold 1420 includes an outer lamination retention portion 1465, an inner lamination retention portion 1470, and a magnet retention portion 1475.

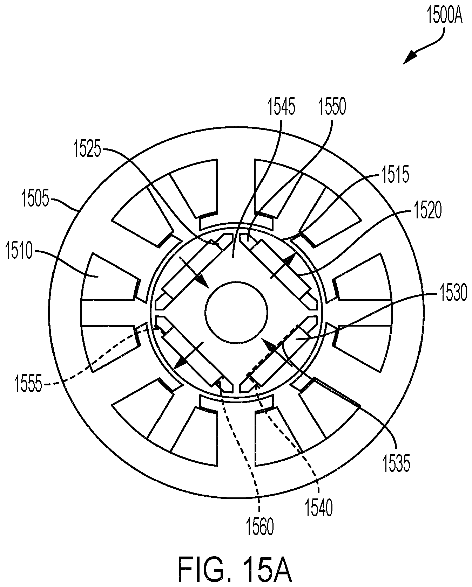

FIGS. 15A-15C illustrate internal permanent magnet motors 1500A, 1500B, 1500C, according to some embodiments. In some embodiments, the motors 1500A, 1500B, 1500C are configured for use in the power tool 100. With reference to FIG. 15A, the motor 1500A includes an internal permanent magnet configuration. The motor 1500A includes a stator 1505 and a plurality of stator winding slots 1510. The plurality of stator winding slots 1510 are configured to receive a plurality of windings. The motor 1500A also includes a rotor 1515. In some embodiments, the rotor has an outer diameter of 22mm. The rotor 1515 includes a plurality of slots 1520, and each slot includes a magnet housing portion 1525 configured to receive a magnet 1530. The magnet 1530 includes a length 1535 and a width 1540. In some examples, the length 1535 ranges from 1.0mm to 12.0mm, and the width 1540 ranges from 2.0mm to 3.0mm. For instance, the magnet 1530 may have a length 1535 10mm of and a width of 2.5mm. The rotor 1515 further includes a lamination stack 1545 and air slots 1550. In some instances, the air slots 1550 are located within the lamination stack 1545, and the air slots 1550 extend along a length of the rotor 1515 in an axially transverse direction along the rotor 1515. The air slots 1550 include a length 1555 and a width 1560. In some embodiments, the size of the air slots 1550, or the length 1555 and width 1560 of the air slots 1550, increases or decreases along with the size of the magnet 1530. For example, the length 1535 of the magnet 1530 may be decreased in order to reduce the manufacturing cost of the motor 1500A. Accordingly, the length 1555 of the air slot may be increased along with the reduced magnet size. Alternatively, in some embodiments, the lamination stack 1545 is configured to occupy the space of the reduced magnet length 1535.

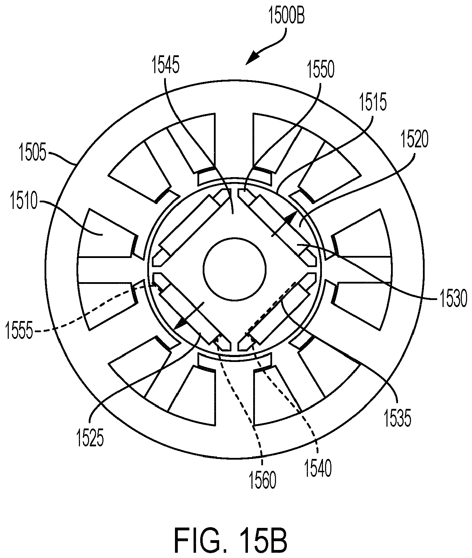

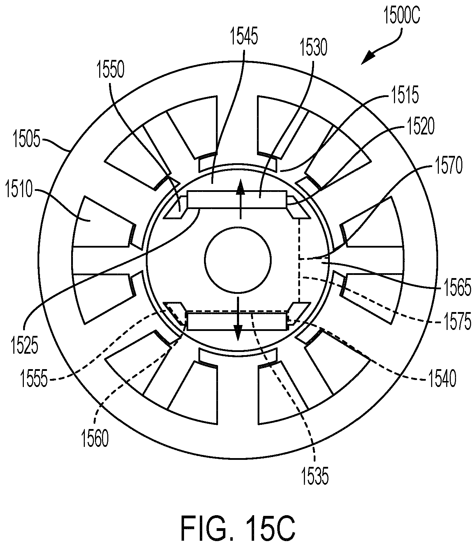

FIG. 15B illustrates an alternative embodiment 1500B of the internal permanent magnet motor, according to some aspects. In this embodiment, only two magnets 1530 are inserted into the plurality of slots 1520. These magnets 1530 are configured to have the same magnetic polarization. The replacement poles are consequent poles. FIG. 15C illustrates an embodiment 1500C of the internal permanent magnet motor that includes consequent poles 1565 located on the lamination stack 1545. The consequent pole 1565 has a length 1570 and a width 1575. In some instances, the length 1555 of the air slot 1550 extends at approximately a 45-degree angle away from the length 1535 of the magnet 1530 and in a direction towards the consequent poles 1565. In some instances, the length of the air slot 1550 is increased as the length of the magnet 1530 is decreased. In addition to decreased manufacturing costs, a larger air slot may prevent magnetic saturation in the motor 1500C materials. In some circumstances, magnetic saturation may occur when the magnets 1530 are fully magnetized. By increasing the length 1555 of the air slot 1550, the flux density can be more effectively managed, reducing the risk of reaching saturation levels. In some embodiments, the length 1570 and width 1575 of the consequent pole 1565 can be manipulated to control the performance of the motor 1500C.

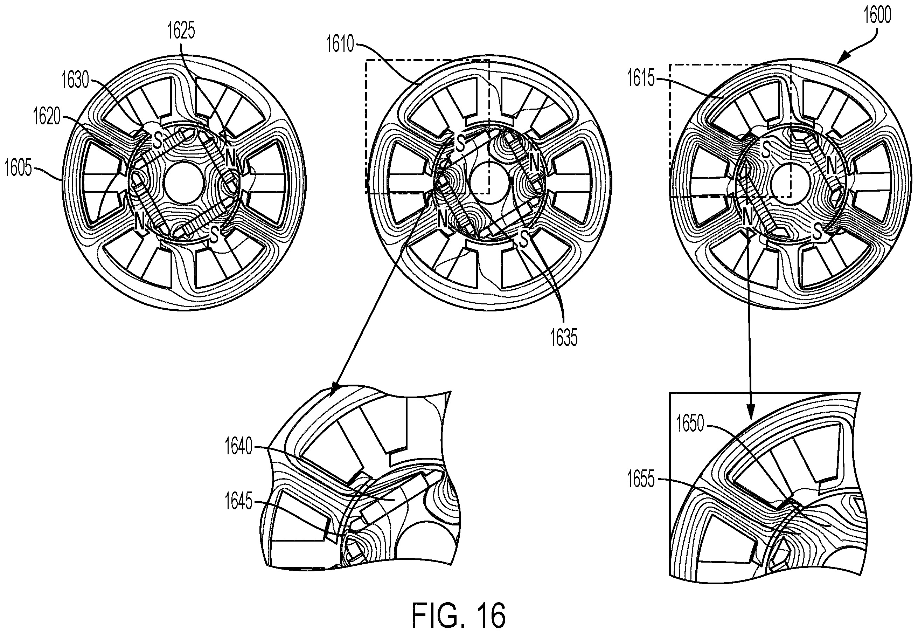

FIG. 16 illustrates of flux flow in a consequent pole motor and in internal permanent magnet motors, according to some embodiments. An illustration 1600 includes a conventional four magnet internal permanent magnet ("IPM") motor 1605 (e.g., motor 1500A), a conventional two magnet internal permanent magnet ("two magnet IPM") 1610 (e.g., motor 1500B), and an optimized consequent pole motor 1615 (e.g., motor 1500C). The conventional IPM motor 1605 includes magnetic field lines 1620 generated by magnetic north pole 1625 and south pole 1630. The conventional two magnet IPM motor 1610 has two fewer magnets, highlighted by portion 1635 of the motor 1610. In some embodiments, removal of these magnets causes low flux line density 1640 and a longer flux path 1645. Conversely, the optimized consequent pole motor 1615 includes consequent poles in place of the removed magnets, creating a uniform flux density 1650 and a shorter flux path 1655.

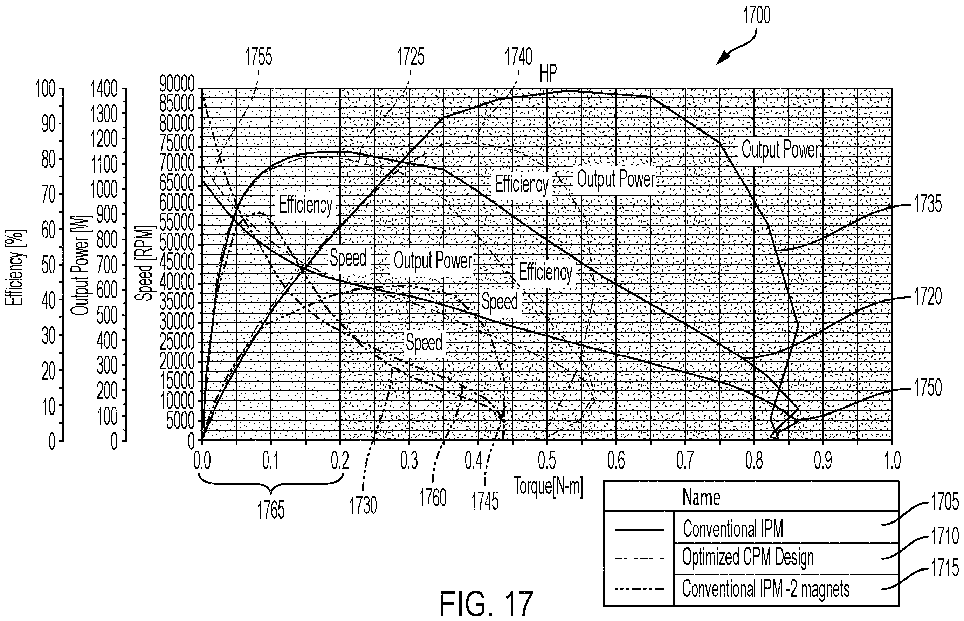

FIG. 17 graphically illustrates performance of consequent pole motor (e.g., motor 1500C) and an internal permanent magnet motors (e.g., motors 1500A, 1500B), according to some embodiments. The graph 1700 includes a conventional internal permanent magnet ("IPM") motor 1705 (e.g., motor 1500A), an optimized consequent pole motor ("CPM") motor 1710 (e.g., motor 1500C), and a conventional two magnet internal permanent magnet ("two magnet IPM") motor 1715 (e.g., motor 1500B). In some examples, the efficiency of the three motors 1705, 1710, 1715 begin at approximately the same level, where output torque is 0 Nm. The conventional IPM motor 1705 efficiency 1720 increases to a peak of approximately 85% at 0.2 Nm. The optimized CPM motor 1710 efficiency 1725 increases to a peak of approximately 82% at 0.15 Nm. The two magnet IPM motor 1715 efficiency 1730 increases to a peak of approximately 65% at 0.08 Nm. In some examples, the output power of the three motors 1705, 1710, 1715 begin at approximately the same level, where output torque is 0 Nm. The conventional IPM motor 1705 output power 1735 increases to a peak of approximately 1400 Watts at 0.53 Nm. The optimized CPM motor 1710 output power 1740 increases to a peak of approximately 1200 Watts at 0.4 Nm. The two magnet IPM motor 1715 output power 1745 increases to a peak of approximately 600 Watts at 0.3 Nm.

The conventional IPM motor 1705 speed 1750 decreases in a non-linear manner until approximately 40,000 RPM at 0.25 Nm, after which the speed 1750 begins to decrease at a more linear rate. The optimized CPM motor 1710 speed 1755 decreases in a concave manner until approximately 40,000 RPM and 0.2 Nm, after which the speed 1755 begins to decrease at a more linear rate. The two magnet IPM motor 1715 speed 1760 decreases sharply across all torques. As evidenced by the graph 1700, the efficiency of the conventional IPM motor 1705 and the optimized CPM motor 1710 in a desired operating region 1765 (e.g., approximately 0.2Nm or less) are approximately equal. On the other hand, the efficiency of the two magnet IPM motor 1715 is roughly equal to motors 1705 and 1710 until 0.05Nm, where the two magnet IPM motor 1715 efficiency 1730 rapidly declines below 65%. In the desired operating region 1765, the conventional IPM motor 1705 and the optimized CPM motor 1710 have approximately the same output power. The two magnet IPM motor 1715 output power 1745 diverges from motors 1705 and 1710 at approximately 450 Watts at 0.8Nm. This illustrates that removing two magnets from the conventional IPM motor 1705 reduces both the efficiency and output power significantly. However, the optimized CPM motor 1710 does not experience similar decline in performance, illustrating that a better performance within the desired operating region 1765 is achievable without the use of the conventional IPM motor 1705 (e.g., with less magnetic material).

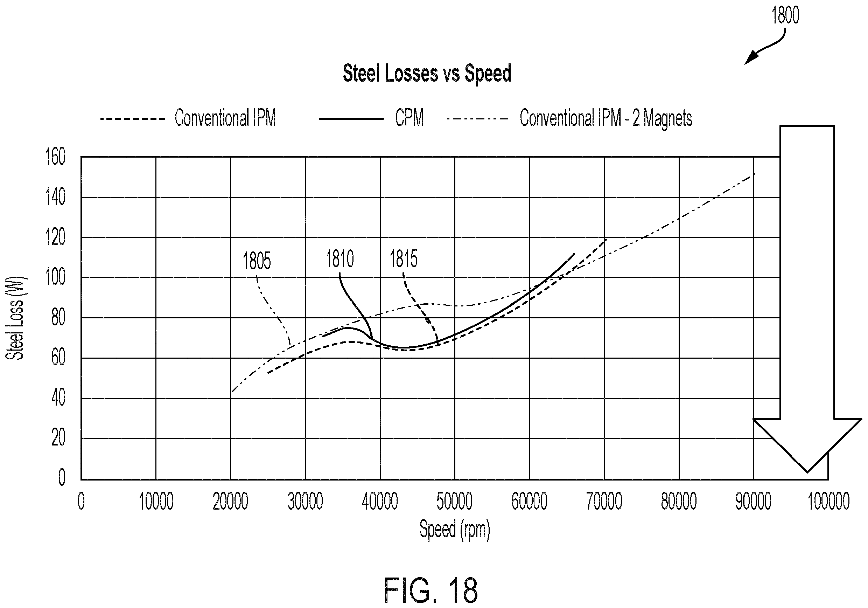

FIG. 18 graphically illustrates steel loss vs speed of a consequent pole motor, according to some embodiments. Illustrated in graph 1800 are a conventional internal permanent magnet ("IPM") motor (e.g., motor 1500A) steel loss 1805, a consequent pole motor ("CPM") (e.g., motor 1500C) steel loss 1810, and a conventional two magnet internal permanent magnet ("two magnet IPM") motor 1815. Generally, the speed loss of all three motor types increases as speed increases. In the conventional two magnet IPM motor, steel loss is generally linear, increasing from approximately 40 Watts at 20,000 RPM to 150 Watts at 90,000 RPM. Conversely, the CPM steel loss 1810 initially increases to about 75 Watts at 30,000 RPM, before declining to approximately 65 Watts at 42,500 RPM. From there, CPM steel loss 1810 increase again until peaking at 110 Watts at about 65,000 RPM. The conventional IPM motor steel loss 1805 follows a similar pattern, initially increasing to approximately 70 Watts at 35,000 RPM before declining to 65 Watts at 42,500 RPM. From here, the conventional IPM motor steel loss 1805 increases until peaking at 120 Watts at about 70,000 RPM.

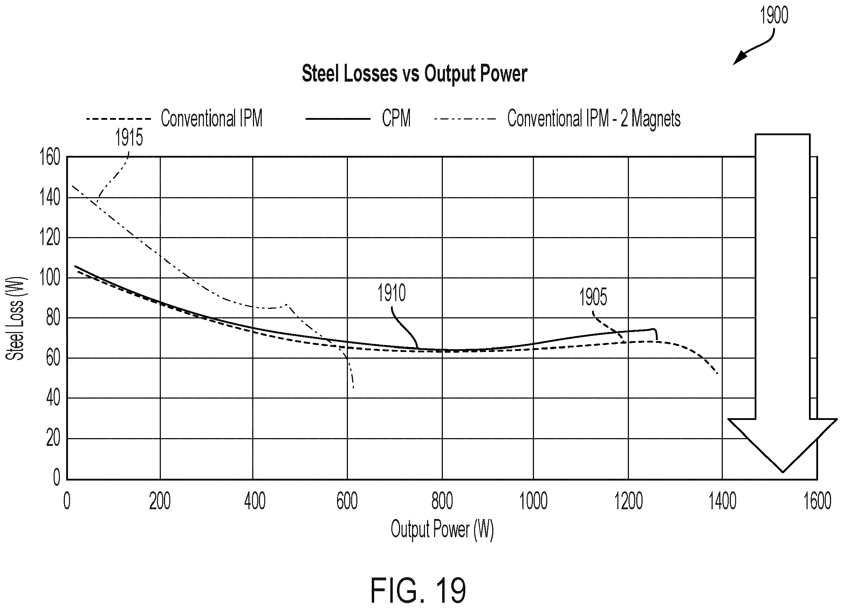

FIG. 19 graphically illustrates steel loss vs output power of a consequent pole motor, according to some embodiments. Illustrated in graph 1900 are a conventional IPM motor (e.g., motor 1500A) steel loss 1905, a CPM (e.g., motor 1500C) steel loss 1910, and a conventional two magnet IPM motor (e.g., motor 1500B) steel loss 1915. As compared to the conventional IPM motor, steel losses 1905 for the conventional IPM motor and the CPM steel loss 1910 are approximately equal. Both the conventional IPM motor steel loss 1905 and the CPM steel loss 1910 are between 60 Watts and 80 Watts for an output power range of approximately 300 Watts to 1300 Watts.

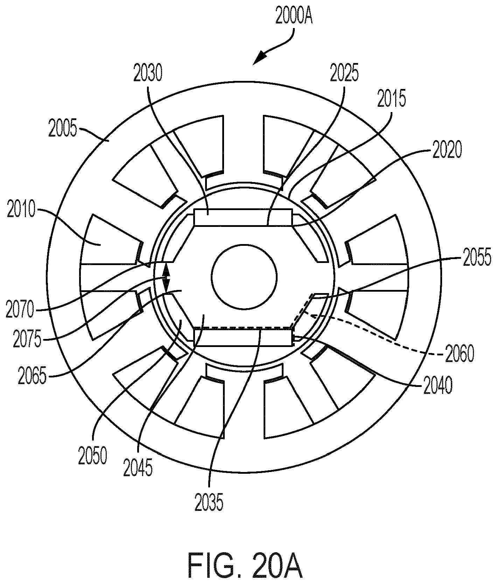

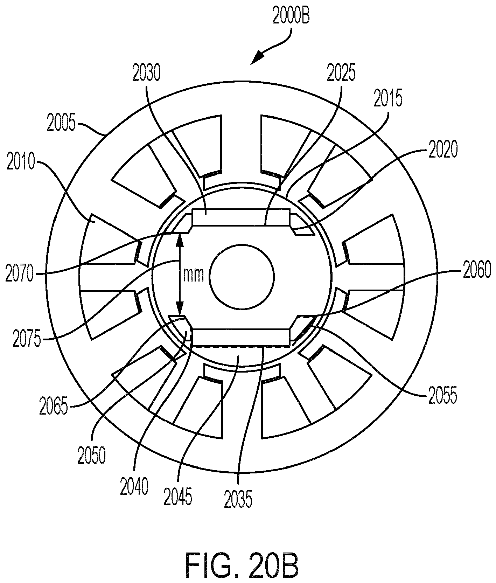

FIGS. 20A-20B illustrate consequent pole motors 2000A, 2000B, according to some embodiments. With reference to FIG. 20A, the motor 2000A is configured for use in the power tool 100. The motor 2000A includes internal permanent magnet configuration. The motor 2000A includes a stator 2005 and a plurality of stator winding slots 2010. The plurality of stator winding slots 2010 are configured to receive a plurality of windings. The motor 2000A also includes a rotor 2015. The rotor 2015 includes a plurality of slots 2020, and each slot includes a magnet housing portion 2025 configured to receive a magnet 2030. The magnet 2030 includes a length 2035 and a width 2040. In some instances, the magnet 2030's length 2035 is approximately 15mm and the width 2040 ranges from 1.5mm to 3.0mm. The rotor 2015 further includes a lamination stack 2045 and air slots 2050. The air slots 2050 include a length 2055 and a width 2060. In some embodiments, the size of the air slots 2050, or the length 2055 and width 2060 of the air slots 2050, increases or decreases along with the size of the magnets 2030. For example, the length 2035 of the magnet 2030 may be decreased in order to reduce the manufacturing cost of the motor 2400. Accordingly, the length 2055 of the air slot may be increased along with the reduced magnet size. Alternatively, in some embodiments, the lamination stack 2045 is configured to occupy the space of the reduced magnet length 2035. The rotor 2015 includes a consequent pole 2065. The consequent pole as a length 2070 and a width 2075. In some embodiments, the length 2070 or the width 2075 of the consequent pole 2065 can be controlled to control the performance of the motor 2000A. For instance, a consequent pole width of 4mm may have an effect on torque ripple, as previously described. In some instances, the consequent pole 2065 has a width 2075 of 1mm to 12mm. For instance, as illustrated in FIG. 20B, the motor 2000B has a consequent pole width 2075 of, for example, 10.2mm. Other measurements may also change the performance of the motor 2000A, 2000B. For instance, in some examples when the consequent pole 2065 has a width 2075 increased to 10.2mm, the length 2055 of the air slot is reduced.

Similar to previously described motors 1500A-1500C, for the consequent pole motors 2000A, 2000B, the length 2055 of the air slot 2050 extends at approximately a 45-degree angle away from the length 2035 of the magnet 2030 and in a direction towards the consequent poles 2065. In some instances, the length 2055 of the air slot 2055 is increased as the length 2035 of the magnet 2030 is decreased. In addition to decreased manufacturing costs, a larger air slot can may prevent magnetic saturation in the motor 2000A, 2000B materials. In some circumstances, magnetic saturation may occur when the magnets 2030 are fully magnetized. By increasing the length 2055 of the air slot 2050, the flux density can be more effectively managed, reducing the risk of reaching saturation levels.

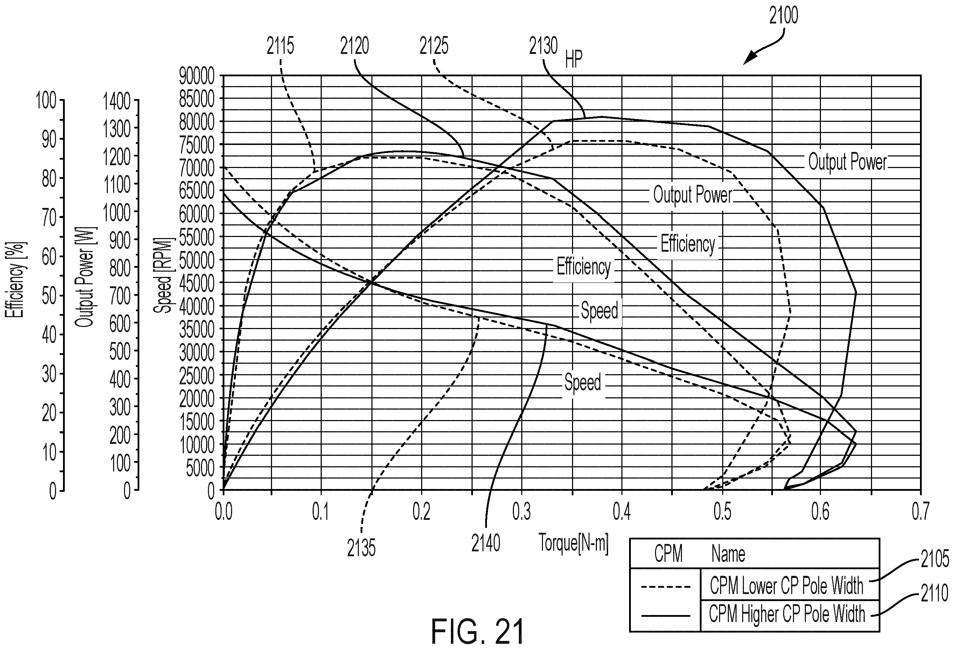

FIG. 21 graphically illustrates the performance of consequent pole motors, according to some embodiments. A graph 2100 illustrates the performance comparison of a consequent pole motor with a higher pole width 2110 (e.g., motor 2000B) and a consequent pole motor with a lower pole width 2105 (e.g., motor 2000A). As illustrated in the graph 2100, the lower width efficiency 2115 and the higher width efficiency 2120 follow approximately the same efficiency curve until an efficiency of approximately 80% at 0.2 Nm. At this point, the lower width efficiency 2115 diverges until efficiency is approximately 0% at 0.48Nm and the higher width efficiency 2120 is 0% at 5.6Nm. The lower width output power 2125 rises to approximately 1200 Watts at 0.35Nm, before declining to 0 Watts at 0.48Nm. The higher width output power 2130 rises to approximately 1250 Watts at 0.33Nm, before declining to 0 Watts at 0.56Nm. The lower width speed 2135 and the higher width speed 2140 decline at approximately the same rate, with the lower width speed 2135 ending at 0 RPM and 0.48Nm and the higher width speed 2140 ending at 0 RPM and 0.56Nm. As observed by graph 2100, the consequent pole motor including higher pole width 2110 generally has a greater maximum output power, and an improved efficiency at higher torque levels.

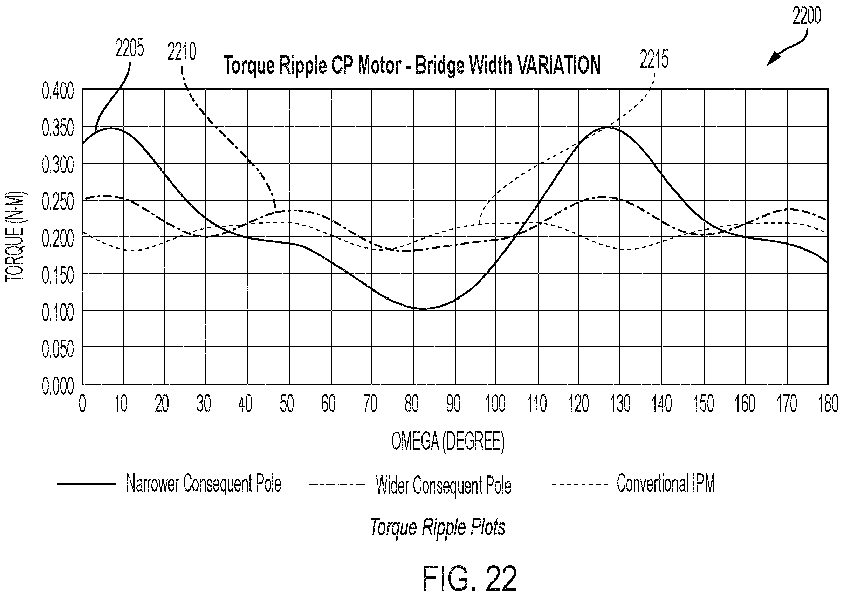

FIG. 22 graphically illustrates torque ripple of a conventional IPM motor and the consequent pole motors 2000A, 2000B, according to some embodiments. Similar to the graph 2200, the width of the consequent pole of a consequent pole motor can impact the torque ripple. Illustrated in the graph 2200 is a narrow consequent pole torque ripple 2205. The narrow consequent pole torque ripple 2205 amplitude peaks at approximately 0.35Nm at 10 degrees and again at 130 degrees. The narrow consequent pole torque ripple 2205 amplitude is lowest at 0.1Nm at 85 degrees. On the other hand, the wider consequent pole torque ripple 2210 amplitude peaks at 0.25Nm at approximately 5 degrees, 50 degrees, 125 degrees, and 170 degrees. The graph 2200 includes a conventional internal permanent magnet torque ripple 2215. As illustrated in the graph 2200, the overall torque ripple is reduced by widening the consequent pole. In some embodiments, reduction in torque ripple by widening the consequent pole may lead to a reduced noise, reduced vibration, or other performance enhancing effects in a consequent pole motor.

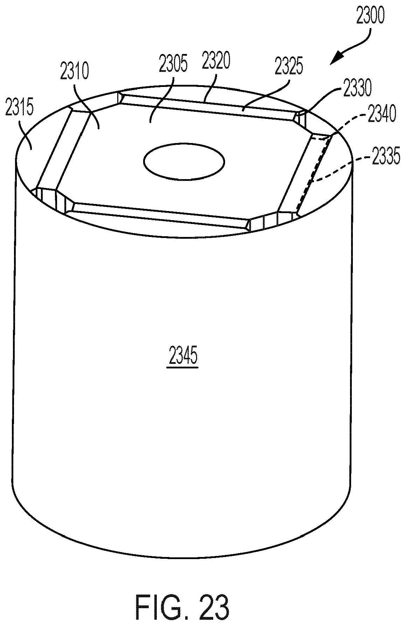

FIG. 23 illustrates an internal permanent magnet motor rotor 2300, according to some embodiments. The rotor 2300 includes a lamination stack 2305. The lamination stack 2305 includes an inner lamination portion 2310 and an outer lamination portion 2315. The rotor 2300 includes a plurality of slots 2320, and each slot includes a magnet housing portion 2325 configured to receive a magnet 2330. The magnet 2330 includes a length 2335 and a width 2340. The rotor 2300 also includes a rotor sleeve 2345. In some embodiments, the rotor sleeve 2345 is made of a carbon fiber material. In some embodiments, the carbon fiber sleeve is made of another material, such as a plastic, a non-magnetic metal, a polycarbonate, or the like.

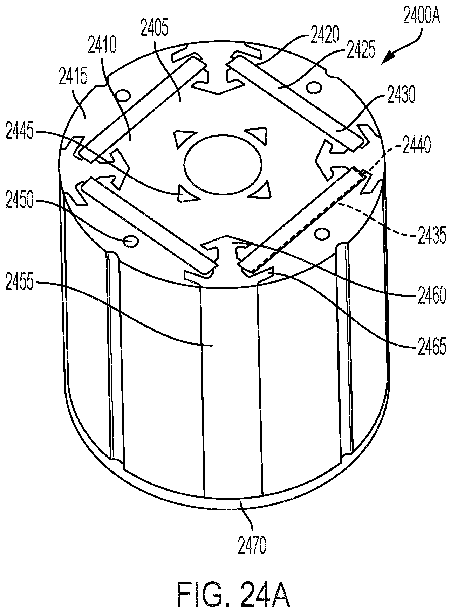

FIG. 24A-24C illustrate internal permanent magnet motor rotors 2400A, 2400B, 2400C, according to some embodiments. As illustrated in FIG. 24A, the rotor 2400A includes a lamination stack 2405. The lamination stack 2405 includes an inner lamination portion 2410 and an outer lamination portion 2415. The rotor 2400A includes a plurality of slots 2420, and each slot 2420 includes a magnet housing portion 2425 configured to receive a magnet 2430. The magnet 2430 includes a length 2435 and a width 2440. The inner lamination portion 2410 of the lamination stack 2405 includes a first axial support portion 2445. The outer lamination portion 2415 of the lamination stack 2405 includes a second axial support portion 2450. In some embodiments, a plastic mold 2455 is configured to retain the inner lamination portion 2410 and the outer lamination portion 2415 of the lamination stack 2405. The plastic mold 2455 may include first retention portion 2460 configured to retain the plastic mold 2455 to the inner lamination portion 2410, and a second retention portion 2465 configured to retain the plastic mold to the outer lamination portion 2415. The plastic mold 2455 also includes a plate 2470 configured to connect the first retention portion 2460 and the second retention portion 2465 to each other, thereby creating a single secure element for retaining the inner lamination portion 2410, the outer lamination portion 2415, and the magnets 2430.

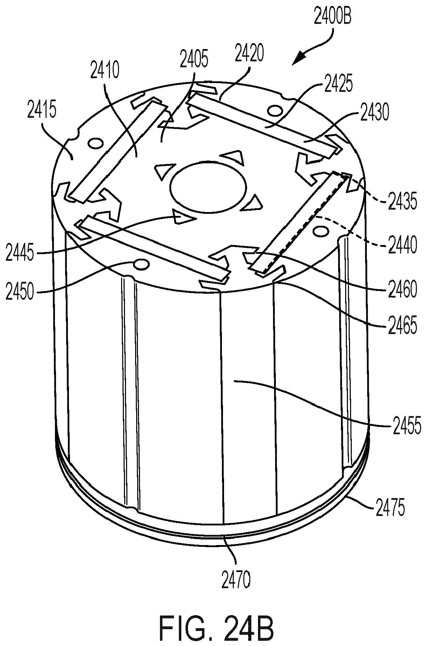

FIG. 24B illustrates the permanent magnet motor rotor 2400B. In this embodiment, the rotor 2400B includes the first axial support portion 2445, the first retention portion 2460, the second retention portion 2465, and the plate 2470 made of injection molded plastic, and the second axial support portion 2450 and a plate portion 2475 made of stainless-steel. The stainless-steel plate portion 2475 is configured to connect to the second axial support portion 2450.

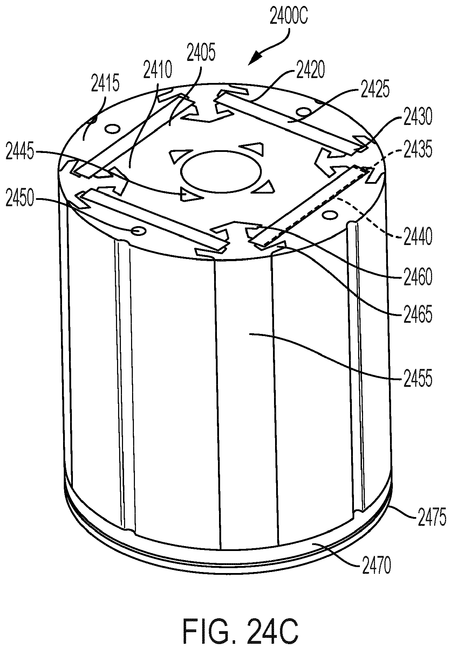

FIG 24C illustrates another embodiment for the rotor 2400C. In this embodiment, both the first axial support portion 2445 and the second axial support portion 2450 are made of stainless-steel, and are configured to connect to the stainless-steel plate portion 2475.

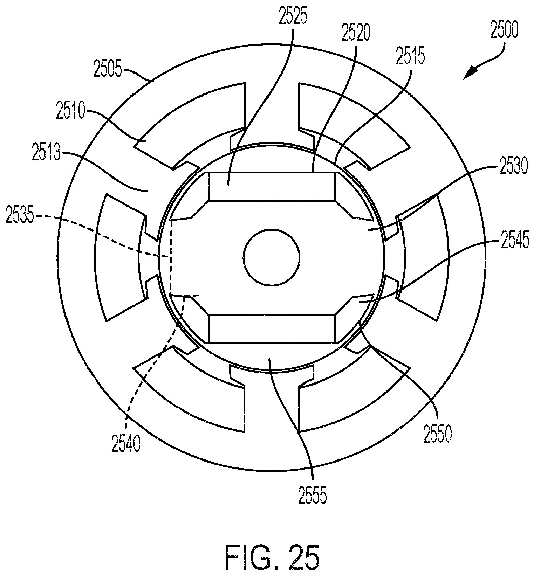

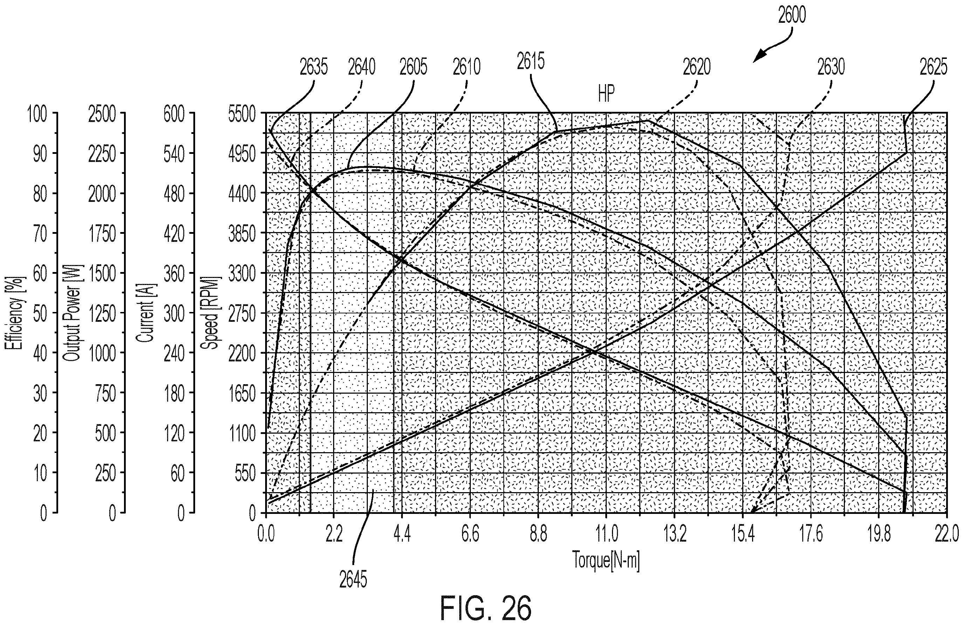

FIG. 25 illustrates a motor 2500, according to some embodiments. The motor 2500 includes a stator 2505 and a plurality of stator winding slots 2510. The stator also includes stator teeth 2513. The plurality of stator winding slots 2510 are configured to receive a plurality of windings, wound around the stator teeth 2513. The motor 2500 also includes a rotor 2515. The rotor 2515 includes a plurality of permanent magnet slots 2520 configured to receive permanent magnets 2525. The rotor 2515 includes a plurality of poles 2530. The poles 2530 have a length 2535 and a width 2540. In some embodiments, the length 2535 or the width 2540 of the pole 2530 is controlled to impact the performance of the motor 2500. The impacts of the dimensions of the pole 2530 are illustrated in FIG. 26 and described in detail below. The motor 2500 also includes an air slot 2545 between the plurality of magnets 2525 and the poles 2530. In some embodiments, the air slot is enclosed by an outer rib 2550 of the lamination stack 2555.

FIG. 26 graphically illustrates the performance of an internal permanent magnet ("IPM") motor compared to the motor 2500, according to some embodiments. The graph includes IPM motor efficiency 2605, IPM motor output power 2615, IPM motor current 2625, and IPM motor speed 2635 when compared to a motor torque. The graph also includes motor efficiency 2610, motor output power 2620, motor current 2630, and motor speed 2640 when compared to a motor torque. The graph 2600 also includes a highlighted operating region 2645, within which both the IPM motor and the motor 2500 nominally operate. As evidenced by the graph 2600, the performance for both IPM motor and the motor 2500 are similar within the operating region 2645. In some examples, the IPM motor represented on the graph 2600 has a magnet mass of approximately 55g, while the motor 2500 has approximately a 28% mass reduction without significantly impacting the performance of the motor 2500 within the operating region 2645.

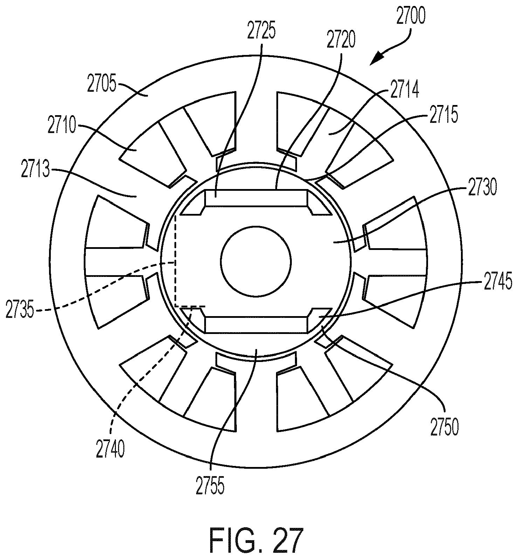

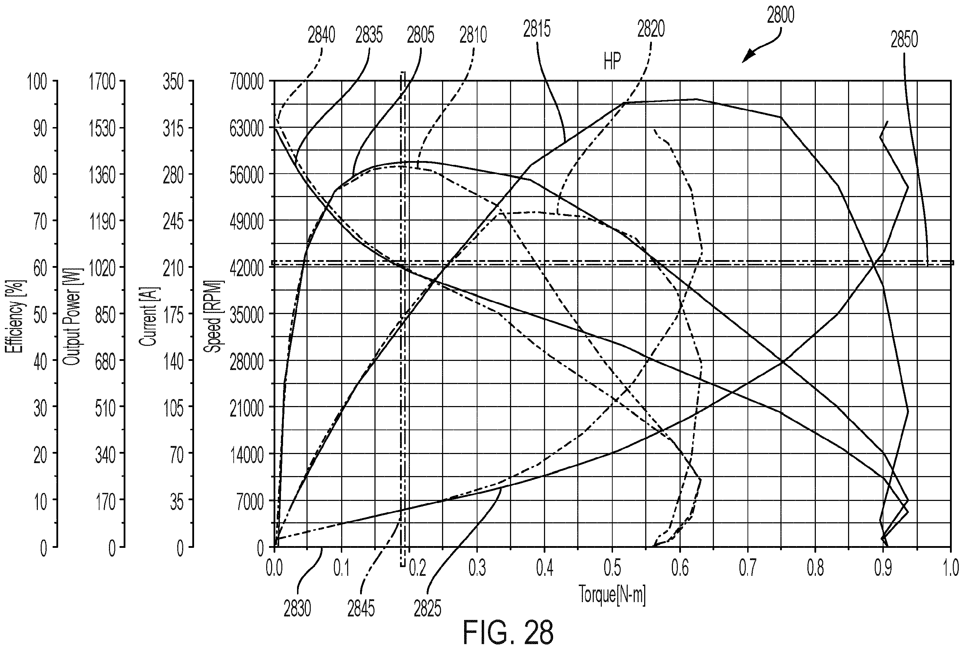

FIG. 27 illustrates an internal permanent magnet motor 2700, according to some embodiments. The motor 2700 includes a stator 2705 and a plurality of stator winding slots 2710. The stator also includes stator teeth 2713. The plurality of stator winding slots 2710 are configured to receive a plurality of windings, wound around the stator teeth 2713. The stator 2705 includes air slots 2714 between the plurality of stator winding slots 2710. The motor 2700 also includes a rotor 2715. The rotor 2715 includes a plurality of permanent magnet slots 2720 configured to receive permanent magnets 2725. The rotor 2715 includes a plurality of consequent poles 2730. The consequent poles 2730 have a length 2735 and a width 2740. In some embodiments, the length 2735 or the width 2740 of the consequent pole 2730 are controlled to impacts the performance of the motor 2700. The impacts of the dimensions of the consequent pole 2730 are illustrated in FIG. 28 and described in detail below. The motor 2700 also includes air slots 2745 between the plurality of magnets 2725 and the consequent poles 2730. In some embodiments, the air slots 2745 are enclosed by an outer rib 2750 of the lamination stack 2755.

FIG. 28 provides a graph 2800 that illustrates a performance comparison between an internal permanent magnet motor and the consequent pole motor 2700. The graph includes IPM motor efficiency 2805, IPM motor output power 2815, IPM motor current 2825, and IPM motor speed 2835 when compared to a motor torque. The graph also includes consequent pole motor efficiency 2810, consequent pole motor output power 2820, consequent pole motor current 2830, and consequent pole motor speed 2840 when compared to a motor torque. The graph 2800 also includes a target operating load 2845 of approximately 0.19Nm, and a target operating speed 2850 of approximately 42,000 RPM. As evidenced by the graph 2800, at higher torque levels, the IPM motor performs with a greater efficiency 2805 and output power 2815 than the motor 2700 efficiency 2810 and output power 2820. However, the performance for both IPM motor and the motor 2700 are similar within the target operating load 2845 region. In some examples, the IPM motor represented on the graph 2800 has a magnet mass of approximately 79g, while the motor 2700 has approximately a 36% mass reduction without significantly impacting the performance of the motor 2700 within the target operating load 2845 region.

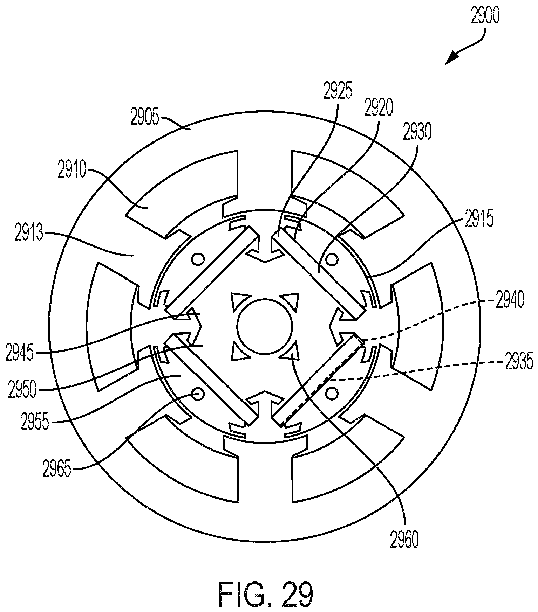

FIG. 29 illustrates an internal permanent magnet motor 2900, according to some embodiments. The motor 2900 includes a stator 2905 and a plurality of stator winding slots 2910. The stator 2905 also includes stator teeth 2913. The plurality of stator winding slots 2910 are configured to receive a plurality of windings, wound around the stator teeth 2913. The motor 2900 also includes a rotor 2915. The rotor 2915 includes a plurality of slots 2920, and each slot 2920 includes a magnet housing portion 2925 configured to receive a magnet 2930. The magnets 2930 include a length 2935 and a width 2940. The rotor 2915 further includes a lamination stack 2945 including an inner lamination portion 2950 and an outer lamination portion 2955. The inner lamination portion 2950 of the lamination stack 2945 includes a first axial support portion 2960. The outer lamination portion 2955 of the lamination stack 2945 includes a second axial support portion 2965. In some embodiments, a plastic mold is configured to retain the inner lamination portion and the outer lamination portion as previously described, and as illustrated in FIGS. 24A-24C. The motor 2900 does not include outer steel ribs that would otherwise enclose the magnets 2930.

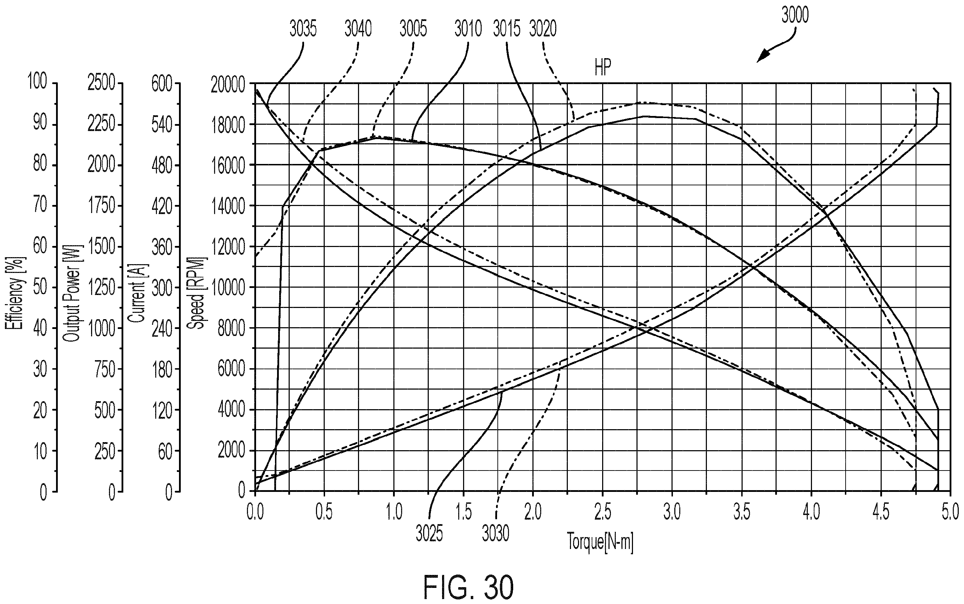

FIG. 30 includes a graph 3000 that illustrates a performance comparison between a conventional internal permanent magnet motor and the motor 2900. The graph 3000 includes conventional IPM motor efficiency 3005, conventional IPM motor output power 3015, conventional IPM motor current 3025, and conventional IPM motor speed 3035 when compared to a motor torque. The graph 3000 also includes motor efficiency 3010, output power 3020, motor current 3030, and motor speed 3040 for the motor 2900 when compared to a motor torque. As evidenced by the graph 3000 the conventional IPM motor performs with approximately the same efficiency 3005 as the motor 2900 efficiency 3010. However, the motor 2900 produces approximately 5% more power than the conventional IPM motor.

### REPRESENTATIVE FEATURES

Representative features are set out in the following clauses, which stand alone or may be combined, in any combination, with one or more features disclosed in the text and/or drawings of the specification.
1. A power tool comprising:
   a battery pack interface configured to receive a removable and rechargeable battery pack; and
   an outer rotor motor including:
      a stator including a plurality of stator teeth configured to receive a plurality of stator coils, and
      a rotor configured to rotate around the stator, the rotor including:
         a first permanent magnet positioned on an inner surface of the rotor,
         a second permanent magnet positioned on the inner surface of the rotor,
   and
      an air slot located between the first permanent magnet and the second permanent magnet on the inner surface of the rotor, the air slot having a length and a width, the length of the air slot being greater than a length of the first permanent magnet or the second permanent magnet.
2. The power tool of clause 1, wherein:
   the stator includes at least twelve stator slots; and
   the rotor includes at least five rotor poles.
3. The power tool of any preceding clause, wherein the first permanent magnet and the second permanent magnet are composed of a rare earth metal.
4. The power tool of any preceding clause, further comprising a consequent pole positioned in the air slot.
5. The power tool of clause 4, wherein the consequent pole is an iron pole.
6. The power tool of clause 4 or 5, wherein the consequent pole includes a width of approximately 1 millimeter to 12 millimeters.
7. The power tool of any preceding clause, wherein the rotor further includes:
   a lamination stack, the lamination stack including an inner lamination portion and an outer lamination portion, and
   a plastic mold, wherein the plastic mold is configured to increase retention of the lamination stack.
8. The power tool of clause 7, wherein the inner lamination portion includes a triangular groove portion configured to retain a first portion of the plastic mold to secure the plastic mold to the inner lamination portion.
9. The power tool of clause 8, wherein the outer lamination portion includes an L-shaped portion configured to retain a second portion of the plastic mold to secure the outer lamination portion to the plastic mold.
10. The power tool of clause 8 or 9, wherein the plastic mold is made of a non-magnetic material.
11. A power tool comprising:
   a battery pack interface configured to receive a removable and rechargeable battery pack; and
   a motor including:
      a stator including a plurality of stator teeth configured to receive a plurality of stator coils, and
      a rotor configured to rotate within the stator, the rotor including:
         a first permanent magnet positioned within a first slot of the rotor,
         a second permanent magnet positioned within a second slot of the rotor,
         a first consequent pole positioned between the first permanent magnet and the second permanent magnet, the first consequent pole having a first length and a first width, and
         a second consequent pole positioned between the first permanent magnet and the second permanent magnet, the second consequent pole having a second length and a second width.
12. The power tool of clause 11, wherein the rotor further includes an outer diameter of approximately 22 millimeters.
13. The power tool of any of clauses 11 or 12, wherein the first permanent magnet and the second permanent magnet are composed of a rare earth metal.
14. The power tool of any of clauses 11 to 13, wherein first permanent magnet includes a length of approximately 1 millimeters to 12 millimeters and a width of approximately 2 millimeters to 3 millimeters.
15. The power tool of any of clauses 11 to 14, wherein the rotor further includes a lamination stack and an air slot.
16. The power tool of clause 15, wherein the air slot is located within the lamination stack and extends in an axially transverse direction along the rotor.
17. The power tool of any of clauses 15 or 16, wherein the air slot includes a length that extends approximately 45-degrees away from the first permanent magnet in a direction towards the first consequent pole.
18. A power tool comprising:
   a battery pack interface configured to receive a removable and rechargeable battery pack; and
   a motor including:
      a stator including a plurality of stator teeth configured to receive a plurality of stator coils, and
      a rotor configured to rotate within the stator, the rotor including:
         a lamination stack,
         a first air slot located within the lamination stack and extends in an axially transverse direction along the rotor,
         a second air slot located within the lamination stack and extends in the axially transverse direction along the rotor,
         a first permanent magnet positioned within a first slot of the rotor,
         a second permanent magnet positioned within a second slot of the rotor,
         a first consequent pole positioned between the first permanent magnet and the second permanent magnet, the first consequent pole having a first length and a first width, and
         a second consequent pole positioned between the first permanent magnet and the second permanent magnet, the second consequent pole having a second length and a second width.
19. The power tool of clause 18, wherein the first air slot includes a first air slot length that extends approximately 45-degrees away from the first permanent magnet in a direction towards the first consequent pole, and wherein the second air slot includes a second air slot length that extends approximately 45-degrees away from the second permanent magnet in a direction towards the second consequent pole.
20. The power tool of clause 19, wherein the first air slot length is sized according to a length of the first permanent magnet, and wherein the second air slot length is sized according to the length of the second permanent magnet.

Thus, embodiments described herein provide a power tool including a consequent pole motor. Various features and advantages are set forth in the following claims.

## Claims

1. A power tool comprising:
a battery pack interface configured to receive a removable and rechargeable battery pack; and
an outer rotor motor including:
a stator including a plurality of stator teeth configured to receive a plurality of stator coils, and
a rotor configured to rotate around the stator, the rotor including:
a first permanent magnet positioned on an inner surface of the rotor,
a second permanent magnet positioned on the inner surface of the rotor, and
an air slot located between the first permanent magnet and the second permanent magnet on the inner surface of the rotor, the air slot having a length and a width, the length of the air slot being greater than a length of the first permanent magnet or the second permanent magnet.

2. The power tool of claim 1, wherein:
the stator includes at least twelve stator slots; and
the rotor includes at least five rotor poles.

3. The power tool of claim 1, wherein the first permanent magnet and the second permanent magnet are composed of a rare earth metal.

4. The power tool of claim 1, further comprising a consequent pole positioned in the air slot.

5. The power tool of claim 4, wherein the consequent pole is an iron pole.

6. The power tool of claim 4, wherein the consequent pole includes a width of
approximately 1 millimeter to 12 millimeters.

7. The power tool of claim 1, wherein the rotor further includes:
a lamination stack, the lamination stack including an inner lamination portion and an outer lamination portion, and
a plastic mold, wherein the plastic mold is configured to increase retention of the lamination stack.

8. The power tool of claim 7, wherein the inner lamination portion includes a triangular groove portion configured to retain a first portion of the plastic mold to secure the plastic mold to the inner lamination portion.

9. The power tool of claim 8, wherein the outer lamination portion includes an L-shaped portion configured to retain a second portion of the plastic mold to secure the outer lamination portion to the plastic mold.

10. The power tool of claim 8, wherein the plastic mold is made of a non-magnetic material.

11. A power tool comprising:
a battery pack interface configured to receive a removable and rechargeable battery pack; and
a motor including:
a stator including a plurality of stator teeth configured to receive a plurality of stator coils, and
a rotor configured to rotate within the stator, the rotor including:
a first permanent magnet positioned within a first slot of the rotor,
a second permanent magnet positioned within a second slot of the rotor,
a first consequent pole positioned between the first permanent magnet and the second permanent magnet, the first consequent pole having a first length and a first width, and
a second consequent pole positioned between the first permanent magnet and the second permanent magnet, the second consequent pole having a second length and a second width.

12. The power tool of claim 11, wherein the rotor further includes an outer diameter of approximately 22 millimeters.

13. The power tool of claim 11, wherein the first permanent magnet and the second permanent magnet are composed of a rare earth metal.

14. The power tool of claim 11, wherein first permanent magnet includes a length of approximately 1 millimeters to 12 millimeters and a width of approximately 2 millimeters to 3 millimeters.

15. The power tool of claim 11, wherein the rotor further includes a lamination stack and an air slot.
